# EUROPEAN PATENT SPECIFICATION

(11) **EP 3 316 616 B1**
(45) Date of publication and mention of the grant of the patent: **08.04.2020**
(21) Application number: 16823850.9
(22) Date of filing: 08.07.2016
(51) Int. Cl.: H04W 24/00, H04W 24/10, H04W 84/12, H04W 74/08

(54) **WLAN CHANNEL MEASUREMENT METHOD AND STATION**
WLAN-KANALMESSVERFAHREN UND STATION
PROCÉDÉ ET STATION DE MESURE DE CANAL WLAN

(30) Priority: 10.07.2015 CN 201510405866; 31.12.2015 CN 201511028305
(43) Date of publication of application: 02.05.2018
(73) Proprietor: Huawei Technologies Co., Ltd., Longgang District Shenzhen, Guangdong 518129 (CN)
(72) Inventor: DU, Zhenguo, Shenzhen Guangdong 518129 (CN); RONG, Zhigang, Shenzhen Guangdong 518129 (CN)
(74) Representative: Körber, Martin Hans
(86) International application number: PCT/CN2016/089425
(87) International publication number: WO 2017/008703

(56) References cited:
- CN-A- 101 345 974
- CN-A- 102 098 084
- CN-A- 102 801 506
- CN-A- 104 184 702
- US-A1- 2005 174 963
- US-A1- 2013 094 488
- US-A1- 2013 201 941
- US-A1- 2015 003 263

## Description

### TECHNICAL FIELD

The present invention relates to the field of communications, and in particular, to a channel measurement method and a STA (Station, station).

### BACKGROUND

As a WLAN (Wireless Local Area Network, wireless local area network) standard evolves, currently, research on and formulation of a next-generation Wi-Fi standard has already started. The next-generation Wi-Fi standard is referred to as an HEW (High Efficiency WLAN, high efficiency wireless local area network) for short, and is intended to increase a system capacity to more than 10 Gbps, and specially focuses on an outdoor deployment scenario of Wi-Fi devices and a high-density deployment scenario of Wi-Fi devices.

For the high-density deployment scenario, a multi-user transmission technology that has an advantage of relatively high performance needs to be introduced to the next-generation Wi-Fi standard, for example, OFDMA (Orthogonal Frequency Division Multiple Access, orthogonal frequency division multiple access) and UL MU-MIMO (Uplink Multi-user Multiple Input Multiple Output, uplink multi-user multiple-input multiple-output). Regardless of OFDMA or UL MU-MIMO, an AP needs to allocate and schedule transmission resources of multiple STAs. To schedule the multiple STAs more effectively, so as to implement UL multi-user transmission, measurement needs to be performed on UL channels.

Currently, the AP may instruct the STAs to send sounding reference signals (sounding) on some specific channels, so as to perform UL channel measurement. However, the AP does not know channels that are occupied by another BSS (Basic Service Set, basic service set) surrounding the STAs. If the STAs send, on these specific channels, soundings according to an indication of the AP, an OBSS (Overlapping Basic Service Set, overlapping basic service set) may be affected. That is, if the STAs send sounding reference signals on an occupied channel, interference may be caused to transmission that is being performed in the BSS surrounding the STAs.

CN102801506A discloses a method and system to perform downlink channel measurement for 802.11ac networks, wherein the STA can choose appropriate bandwidth to send measurement feedback.

### SUMMARY

The invention is set out in the appended claims. The embodiments and/or examples of the following description, which are not covered by the appended claims, are considered as not being part of the present invention.

Embodiments of the present invention provide a channel measurement method according to independent claim land a STA according to independent claim 12, so as to ensure that a sub-channel on which channel measurement is performed is idle, thereby preventing, to some extent, transmission in an OBSS from being affected by UL channel measurement.

To achieve the foregoing objective, the following technical solutions are used in the embodiments of the present invention.

According to a first aspect, a channel measurement method is disclosed, including:
receiving, by a station STA, a measurement notification message sent by an access point AP, where the measurement notification message carries identifier information of a channel that needs to be measured; and
sending, by the STA, a sounding reference signal by using M idle sub-channels, so that the AP measures the M idle sub-channels according to the received sounding reference signal, where the M idle sub-channels are M idle sub-channels determined by the STA from a channel indicated in the identifier information of the channel that needs to be measured, and M is an integer greater than or equal to 1.

With reference to the first aspect, in a first possible implementation of the first aspect,
the measurement notification message further carries an ID of a STA that needs to perform channel measurement, and the STA that needs to perform channel measurement includes at least one STA.

With reference to the first aspect or the first possible implementation of the first aspect, in a second possible implementation of the first aspect,
before the receiving, by a STA, a measurement notification message sent by an access point AP, the method further includes:
performing, by the STA, clear channel assessment CCA on each sub-channel supported by both the AP and the STA, and determining a sub-channel whose CCA result is idle as an available sub-channel; and
the determining, by the STA, the M idle sub-channels from at least one sub-channel included in a channel indicated in the identifier information of the channel that needs to be measured specifically includes:
   determining M sub-channels that are in the channel indicated in the identifier information and that are the same as the available sub-channel as the M idle sub-channels.

With reference to the first aspect or the first possible implementation of the first aspect, in a third possible implementation of the first aspect,
before the sending, by the STA, a sounding reference signal by using M idle sub-channels, the method further includes:
performing, by the STA in first preset duration after receiving the measurement notification message, CCA on each sub-channel in the channel indicated in the identifier information, and determining M sub-channels whose CCA results are idle as the M idle sub-channels.

With reference to the second or the third possible implementation of the first aspect, in a fourth possible implementation of the first aspect,
after the determining, by the STA, the M idle sub-channels, the method further includes:
sending, by the STA, a clear to send CTS frame by using the M idle sub-channels at a first moment, where the first moment is a moment obtained by adding up a moment at which the STA receives the measurement notification message and second preset duration.

With reference to the first aspect or the first possible implementation of the first aspect, in a fifth possible implementation of the first aspect,
the measurement notification message further carries a long training field LTF quantity indication field, and the method further includes:
determining, by the STA according to the LTF quantity indication field carried in the measurement notification message, a STA queue, and a moment at which the STA receives the measurement notification message, a second moment at which the STA sends the sounding reference signal, where the STA queue is obtained by sorting, according to a sequence of IDs that are of the STAs and that appear in the measurement notification message, the STAs that need to perform channel measurement.

With reference to the fifth possible implementation of the first aspect, in a sixth possible implementation of the first aspect,
before the sending, by the STA, a sounding reference signal by using M idle sub-channels, the method further includes:
determining, by the STA according to the LTF quantity indication field carried in the measurement notification message, the STA queue, and the moment at which the STA receives the measurement notification message, a last STA that sends a sounding reference signal, and a third moment at which sending of the sounding reference signal by the last STA that sends the sounding reference signal ends, where the last STA that sends the sounding reference signal is a preceding STA that is in the STA queue and that is adjacent to the STA; and
performing, by the STA, CCA in a time interval between the third moment and the second moment, and determining M sub-channels whose CCA results are idle as the M idle sub-channels.

With reference to any one of the second, the third, or the sixth possible implementation of the first aspect, in a seventh possible implementation of the first aspect,
a network allocation vector NAV of a sub-channel on which the CCA is to be performed is 0.

With reference to any one of the first aspect, or the first to the seventh possible implementations of the first aspect, in an eighth possible implementation of the first aspect, the measurement notification message indicates that N STAs need to perform channel measurement, and N is an integer greater than or equal to 1; and
the measurement notification message carries one LTF quantity indication field, which is used to indicate a quantity of LTF fields included in the sounding reference signal sent by the STA that needs to perform channel measurement; or
the measurement notification message carries N LTF quantity indication fields, where the N LTF quantity indication fields are used to indicate quantities of LTF fields included in sounding reference signal frames sent by the STAs corresponding to the LTF quantity indication fields.

With reference to the eighth possible implementation of the first aspect, in a ninth possible implementation of the first aspect,
if the measurement notification message carries one LTF quantity indication field, the sounding reference signal sent by the STA includes X LTFs, where X is a quantity indicated in the LTF quantity indication field.

With reference to the eighth possible implementation of the first aspect, in a tenth possible implementation of the first aspect,
if the measurement notification message carries N LTF quantity indication fields, the sounding reference signals sent by the STAs include Y LTFs, where Y is a quantity indicated in the LTF quantity indication fields corresponding to the STAs.

With reference to any one of the first aspect, or the first to the tenth possible implementations of the first aspect, in an eleventh possible implementation of the first aspect,
the sounding reference signal further includes a bandwidth indication field, where the bandwidth indication field is used to indicate bandwidth of an idle sub-channel that is used to send the sounding reference signal.

With reference to any one of the first aspect, or the first to the eleventh possible implementations of the first aspect, in a twelfth possible implementation of the first aspect, the measurement notification message further includes a first power indication field, where the first power indication field is used to indicate power used by the AP to send the measurement notification message.

With reference to any one of the first aspect, or the first to the eleventh possible implementations of the first aspect, in a thirteenth possible implementation of the first aspect,
the measurement notification message further includes a second power indication field, where the second power indication field is used to indicate power used by the STA to send the sounding reference signal, or expected power when the sounding reference signal sent by the STA reaches the AP.

With reference to any one of the first aspect, or the first to the eleventh possible implementations of the first aspect, in a fourteenth possible implementation of the first aspect,
the method further includes: the sounding reference signal further includes a third power indication field, where the third power indication field is used to indicate power used for sending the sounding reference signal.

With reference to any one of the first aspect, or the first to the eleventh possible implementations of the first aspect, in a fifteenth possible implementation of the first aspect,
the sounding reference signal further includes a resource request field, where the resource request field is used to indicate a volume of data that needs to be transmitted by the STA that sends the sounding reference signal, or a time requested by the STA for data transmission.

With reference to any one of the first aspect, or the first to the eleventh possible implementations of the first aspect, in a sixteenth possible implementation of the first aspect,
the measurement notification message further includes a sounding reference signal type indication, where the sounding reference signal type indication is used to indicate a type of the sounding reference signal, and the type includes legacy NDP sounding and HEW NDP sounding.

With reference to any one of the first aspect, or the first to the sixteenth possible implementations of the first aspect, in a seventeenth possible implementation of the first aspect,
the measurement notification message further carries a transmission duration indication field, where the transmission duration indication field is used to indicate expected duration between a moment at which transmission of the measurement notification message ends and a moment at which a whole channel measurement process is completed; and
the method further includes: setting, by the STA, a duration Duration field in the CTS frame according to the transmission duration indication field.

According to a second aspect, a station STA is disclosed, including:
a receiving unit, configured to receive a measurement notification message sent by an access point AP, where the measurement notification message carries identifier information of a channel that needs to be measured; and
a sending unit, configured to send a sounding reference signal by using M idle sub-channels, so that the AP measures the M idle sub-channels according to the received sounding reference signal, where the M idle sub-channels are M idle sub-channels determined by the STA from a channel indicated in the identifier information of the channel that needs to be measured, and M is an integer greater than or equal to 1.

With reference to the second aspect, in a first possible implementation of the second aspect,
the measurement notification message further carries an ID of a STA that needs to perform channel measurement, and the STA that needs to perform channel measurement includes at least one STA.

With reference to the second aspect or the first possible implementation of the second aspect, in the second possible implementation of the second aspect,
the STA further includes a first clear channel assessment CCA unit, configured to: perform clear channel assessment CCA on each sub-channel supported by both the AP and the STA, and determine a sub-channel whose CCA result is idle as an available sub-channel; and
the STA further includes a first determining unit, where the first determining unit is specifically configured to determine M sub-channels that are in the channel indicated in the identifier information and that are the same as the available sub-channel as the M idle sub-channels.

With reference to the second aspect or the first possible implementation of the second aspect, in a third possible implementation of the second aspect,
the STA further includes a second determining unit and a second CCA unit, where
the second CCA unit is configured to perform, in first preset duration after the receiving unit receives the measurement notification message, CCA on each sub-channel in the channel indicated in the identifier information; and
the second determining unit is configured to determine M sub-channels whose CCA results are idle as the M idle sub-channels.

With reference to the second or the third possible implementation of the second aspect, in a fourth possible implementation of the second aspect,
the sending unit is further configured to: after the determining the M idle sub-channels, send a clear to send CTS frame by using the M idle sub-channels at a first moment, where the first moment is a moment obtained by adding up a moment at which the STA receives the measurement notification message and second preset duration.

With reference to the second aspect or the first possible implementation of the second aspect, in a fifth possible implementation of the second aspect,
the measurement notification message further carries a long training field LTF quantity indication field, and the STA further includes a third determining unit, where
the third determining unit is configured to determine, according to the LTF quantity indication field carried in the measurement notification message, a STA queue, and a moment at which the STA receives the measurement notification message, a second moment at which the STA sends the sounding reference signal, where the STA queue is obtained by sorting, according to a sequence of IDs that are of the STAs and that appear in the measurement notification message, the STAs that need to perform channel measurement.

With reference to the fifth possible implementation of the second aspect, in a sixth possible implementation of the second aspect,
the third determining unit is further configured to: before the sending unit sends the sounding reference signal by using the M idle sub-channels, determine, according to the LTF quantity indication field carried in the measurement notification message, the STA queue, and the moment at which the STA receives the measurement notification message, a last STA that sends a sounding reference signal, and a third moment at which sending of the sounding reference signal by the last STA that sends the sounding reference signal ends; and the last STA that sends the sounding reference signal is a preceding STA that is in the STA queue and that is adjacent to the STA; and
the STA further includes a second CCA unit, where the second CCA unit is configured to: perform CCA in a time interval between the third moment and the second moment, and determine M sub-channels whose CCA results are idle as the M idle sub-channels.

With reference to any one of the second, the third, or the sixth possible implementation of the second aspect, in a seventh possible implementation of the second aspect, the NAV monitoring unit is configured to: before CCA is performed, determine that a network allocation vector NAV of a sub-channel on which the CCA is to be performed is 0.

With reference to any one of the second aspect, or the first to the seventh possible implementations of the second aspect, in an eighth possible implementation of the second aspect,
the measurement notification message indicates that N STAs need to perform channel measurement, and N is an integer greater than or equal to 1; and
the measurement notification message carries one LTF quantity indication field, which is used to indicate a quantity of LTF fields included in the sounding reference signal sent by the STA that needs to perform channel measurement; or
the measurement notification message carries N LTF quantity indication fields, where the N LTF quantity indication fields are in a one-to-one correspondence with the N STAs that need to perform channel measurement, and are used to indicate quantities of LTF fields included in sounding reference signal frames sent by the STAs corresponding to the LTF quantity indication fields.

With reference to the eighth possible implementation of the second aspect, in a ninth possible implementation of the second aspect,
if the measurement notification message carries one LTF quantity indication field, the sounding reference signal sent by the STA includes X LTFs, where X is a quantity indicated in the LTF quantity indication field.

With reference to the eighth possible implementation of the second aspect, in a tenth possible implementation of the second aspect,
if the measurement notification message carries N LTF quantity indication fields, the sounding reference signals sent by the STAs include Y LTFs, where Y is a quantity indicated in the LTF quantity indication fields corresponding to the STAs.

With reference to any one of the second aspect, or the first to the tenth possible implementations of the second aspect, in an eleventh possible implementation of the second aspect,
the sounding reference signal further includes a bandwidth indication field, where the bandwidth indication field is used to indicate bandwidth of an idle sub-channel that is used to send the sounding reference signal.

With reference to any one of the second aspect, or the first to the eleventh possible implementations of the second aspect, in a twelfth possible implementation of the second aspect,
the measurement notification message further includes a first power indication field, where the first power indication field is used to indicate power used by the AP to send the measurement notification message.

With reference to any one of the second aspect, or the first to the eleventh possible implementations of the second aspect, in a thirteenth possible implementation of the second aspect,
the measurement notification message further includes a second power indication field, where the second power indication field is used to indicate power used by the STA to send the sounding reference signal, or expected power when the sounding reference signal sent by the STA reaches the AP.

With reference to any one of the second aspect, or the first to the eleventh possible implementations of the second aspect, in a fourteenth possible implementation of the second aspect,
the sounding reference signal further includes a third power indication field, where the third power indication field is used to indicate power used for sending the sounding reference signal.

With reference to any one of the second aspect, or the first to the eleventh possible implementations of the second aspect, in a fifteenth possible implementation of the second aspect,
the sounding reference signal further includes a resource request field, where the resource request field is used to indicate a volume of data that needs to be transmitted by the STA that sends the sounding reference signal, or a time requested by the STA for data transmission.

With reference to any one of the second aspect, or the first to the fifteenth possible implementations of the second aspect, in a sixteenth possible implementation of the second aspect,
the measurement notification message further includes a sounding reference signal type indication, where the sounding reference signal type indication is used to indicate a type of the sounding reference signal, and the type includes legacy NDP sounding and HEW NDP sounding.

With reference to any one of the second aspect, or the first to the sixteenth possible implementations of the second aspect, in a seventeenth possible implementation of the second aspect,
the measurement notification message further carries a transmission duration indication field, where the transmission duration indication field is used to indicate expected duration between a moment at which transmission of the measurement notification message ends and a moment at which a whole channel measurement process is completed; and
the STA further includes a set unit, where
the setting unit is configured to set a duration Duration field in the CTS frame according to the transmission duration indication field.

According to a third aspect, a station STA is disclosed, including a communications interface and a processor, where
the processor is configured to receive, by using the communications interface, a measurement notification message sent by an access point AP, where the measurement notification message carries identifier information of a channel that needs to be measured; and
the processor is further configured to send a sounding reference signal by using the communications interface and M idle sub-channels, so that the AP measures the M idle sub-channels according to the received sounding reference signal, where the M idle sub-channels are M idle sub-channels determined by the STA from a channel indicated in the identifier information of the channel that needs to be measured, and M is an integer greater than or equal to 1.

With reference to the third aspect, in a first possible implementation of the third aspect, the measurement notification message further carries an ID of a STA that needs to perform channel measurement, and the STA that needs to perform channel measurement includes at least one STA.

With reference to the third aspect or the first possible implementation of the third aspect, in a second possible implementation of the third aspect,
the processor is further configured to: perform clear channel assessment CCA on each sub-channel supported by both the AP and the STA, and determine a sub-channel whose CCA result is idle as an available sub-channel; and
the processor is further configured to determine M sub-channels that are in the channel indicated in the identifier information and that are the same as the available sub-channel as the M idle sub-channels.

With reference to the third aspect or the first possible implementation of the third aspect, in a third possible implementation of the third aspect,
the processor is configured to: perform, in first preset duration after the communications interface receives the measurement notification message, CCA on each sub-channel in the channel indicated in the identifier information, and determine M sub-channels whose CCA results are idle as the M idle sub-channels.

With reference to the second or the third possible implementation of the third aspect, in a fourth possible implementation of the third aspect,
the processor is further configured to: after the determining the M idle sub-channels, send a clear to send CTS frame by using the communications interface and the M idle sub-channels at a first moment, where the first moment is a moment obtained by adding up a moment at which the STA receives the measurement notification message and second preset duration.

With reference to the third aspect or the first possible implementation of the third aspect, in a fifth possible implementation of the third aspect,
the measurement notification message further carries a long training field LTF quantity indication field; and
the processor is configured to determine, according to the LTF quantity indication field carried in the measurement notification message, a STA queue, and a moment at which the STA receives the measurement notification message, a second moment at which the STA sends the sounding reference signal, where the STA queue is obtained by sorting, according to a sequence of IDs that are of the STAs and that appear in the measurement notification message, the STAs that need to perform channel measurement.

With reference to the fifth possible implementation of the third aspect, in a sixth possible implementation of the third aspect,
the processor is further configured to: before the communications interface sends the sounding reference signal by using the M idle sub-channels, determine, according to the LTF quantity indication field carried in the measurement notification message, the STA queue, and the moment at which the STA receives the measurement notification message, a last STA that sends a sounding reference signal, and a third moment at which sending of the sounding reference signal by the last STA that sends the sounding reference signal ends; and the last STA that sends the sounding reference signal is a preceding STA that is in the STA queue and that is adjacent to the STA; and
the processor is further configured to: perform CCA in a time interval between the third moment and the second moment, and determine M sub-channels whose CCA results are idle as the M idle sub-channels.

With reference to any one of the second, the third, or the sixth possible implementation of the third aspect, in a seventh possible implementation of the third aspect,
the processor is further configured to: before CCA is performed, determine that an NAV of a sub-channel on which the CCA is to be performed is 0.

With reference to any one of the third aspect, or the first to the seventh possible implementations of the third aspect, in an eighth possible implementation of the third aspect,
the measurement notification message indicates that N STAs need to perform channel measurement, and N is an integer greater than or equal to 1; and
the measurement notification message carries one LTF quantity indication field, which is used to indicate a quantity of LTF fields included in the sounding reference signal sent by the STA that needs to perform channel measurement; or
the measurement notification message carries N LTF quantity indication fields, where the N LTF quantity indication fields are separately used to indicate quantities of LTF fields included in sounding reference signal frames sent by the STAs corresponding to the LTF quantity indication fields.

With reference to the eighth possible implementation of the third aspect, in a ninth possible implementation of the third aspect,
if the measurement notification message carries one LTF quantity indication field, the sounding reference signal sent by the STA includes X LTFs, where X is a quantity indicated in the LTF quantity indication field.

With reference to the eighth possible implementation of the third aspect, in a tenth possible implementation of the third aspect,
if the measurement notification message carries N LTF quantity indication fields, the sounding reference signals sent by the STAs include Y LTFs, where Y is a quantity indicated in the LTF quantity indication fields corresponding to the STAs.

With reference to any one of the third aspect, or the first to the tenth possible implementations of the third aspect, in an eleventh possible implementation of the third aspect,
the sounding reference signal further includes a bandwidth indication field, where the bandwidth indication field is used to indicate bandwidth of an idle sub-channel that is used to send the sounding reference signal.

With reference to any one of the third aspect, or the first to the eleventh possible implementations of the third aspect, in a twelfth possible implementation of the third aspect,
the measurement notification message further includes a first power indication field, where the first power indication field is used to indicate power used by the AP to send the measurement notification message.

With reference to any one of the third aspect, or the first to the eleventh possible implementations of the third aspect, in a thirteenth possible implementation of the third aspect,
the measurement notification message further includes a second power indication field, where the second power indication field is used to indicate power used by the STA to send the sounding reference signal, or expected power when the sounding reference signal sent by the STA reaches the AP.

With reference to any one of the third aspect, or the first to the eleventh possible implementations of the third aspect, in a fourteenth possible implementation of the third aspect,
the sounding reference signal further includes a third power indication field, where the third power indication field is used to indicate power used for sending the sounding reference signal.

With reference to any one of the third aspect, or the first to the eleventh possible implementations of the third aspect, in a fifteenth possible implementation of the third aspect,
the sounding reference signal further includes a resource request field, where the resource request field is used to indicate a volume of data that needs to be transmitted by the STA that sends the sounding reference signal, or a time requested by the STA for data transmission.

With reference to any one of the third aspect, or the first to the fifteenth possible implementations of the third aspect, in a sixteenth possible implementation of the third aspect,
the measurement notification message further includes a sounding reference signal type indication, where the sounding reference signal type indication is used to indicate a type of the sounding reference signal, and the type includes legacy NDP sounding and HEW NDP sounding.

With reference to any one of the third aspect, or the first to the sixteenth possible implementations of the third aspect, in a seventeenth possible implementation of the third aspect, the measurement notification message further carries a transmission duration indication field, where the transmission duration indication field is used to indicate expected duration between a moment at which transmission of the measurement notification message ends and a moment at which a whole channel measurement process is completed; and
the processor is further configured to set a duration Duration field in the CTS frame according to the transmission duration indication field.

According to the channel measurement method and the STA provided in the present invention, the STA receives the measurement notification message sent by the AP, where the measurement notification message carries the identifier information of the channel that needs to be measured, and determines the M idle sub-channels from the at least one sub-channel included in the channel indicated in the identifier information of the channel that needs to be measured; and the STA sends the sounding reference signal by using the M idle sub-channels, so that the AP measures the M idle sub-channels according to the received sounding reference signal. Compared with the prior art in which the STA sends a sounding reference signal on a channel indicated by the AP, and the AP does not know channels that are occupied by a BSS surrounding the STA, and consequently, the STA may send a sounding on an occupied channel, further causing interference to transmission being performed by an OBSS device, in the present invention, the STA selects, in a channel specified by the AP, an idle sub-channel for the STA to send a sounding, so that it can be ensured that the sub-channel on which channel measurement is performed is idle, thereby preventing, to some extent, transmission in an OBSS from being affected by UL channel measurement.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a channel measurement method according to Embodiment 1 of the present invention;
FIG. 2 is a schematic diagram of a CTS frame according to Embodiment 1 of the present invention;
FIG. 3 (a) is a schematic diagram of a frame structure of a sounding reference signal (HEW NDP Sounding) according to Embodiment 1 of the present invention;
FIG. 3 (b) is a schematic diagram of a frame structure of another sounding reference signal (Legacy NDP Sounding) according to Embodiment 1 of the present invention;
FIG. 4 is a schematic diagram of sending a sounding reference signal in a TDM manner according to Embodiment 1 of the present invention;
FIG. 5 is a schematic diagram of sending a sounding reference signal in a CDM manner according to Embodiment 1 of the present invention;
FIG. 6 is a schematic diagram of combination of a method according to the present invention and a DL channel measurement mechanism;
FIG. 7 is a schematic diagram of combination of a method according to the present invention and an MU-RTS/CTS mechanism;
FIG. 8 is a structural block diagram of a STA according to Embodiment 2 of the present invention;
FIG. 9 is another structural block diagram of a STA according to Embodiment 2 of the present invention;
FIG. 10 is still another structural block diagram of a STA according to Embodiment 2 of the present invention; and
FIG. 11 is a structural block diagram of a STA according to Embodiment 3 of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

As a WLAN standard evolves, a current IEEE 802.11 working team has started to research and formulate a next-generation Wi-Fi standard. The next-generation Wi-Fi standard has a project code 802.11ax, and is intended to increase a system capacity to more than 10 Gbps, and a multi-user transmission technology that has an advantage of relatively high performance, such as OFDMA and UL MU-MIMO, is very likely to be introduced. In the multi-user transmission technology, an AP needs to allocate and schedule transmission resources of multiple STAs, and scheduling information is included in a trigger (Trigger) frame sent by the AP. To better implement scheduling of UL transmission of the multiple STAs by the AP, the AP needs to perform measurement on UL channels.

In an existing LTE system, an eNB (Evolved NodeB, evolved NodeB) instructs UE (User Equipment, user equipment) to periodically or aperiodically send an SRS (Sounding Reference Signal, sounding reference signal) on some specific bandwidth, so that the eNB can measure an uplink channel. This measurement mechanism is introduced to 802.11ax. The AP instructs the STA to send a sounding on a specific channel, so that the AP can perform channel measurement. Because the AP does not know an interference environment surrounding the STA, if the AP instructs the STA to send the sounding on a specific channel, interference may be easily caused to an OBSS. This is especially true in a high-density deployment scenario of devices. The BSS is a cell formed by an AP and STAs associated with the AP, and the OBSS is a neighboring cell whose coverage area partially overlaps with that of the BSS.

On this basis, the present invention provides a channel measurement method that is applicable to the 802.11 system. In this method, relatively little impact is caused to the OBSS, so that an AP can schedule multiple STAs based on a channel measurement result, thereby implementing efficient UL MU transmission.

### Embodiment 1

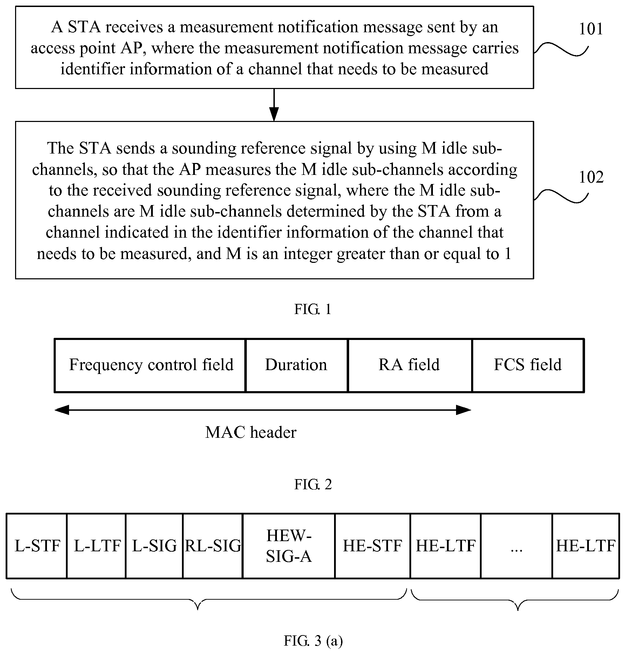

An embodiment of the present invention provides a channel measurement method, which is executed by a STA. As shown in FIG. 1, the method includes the following steps.

101 The STA receives a measurement notification message sent by an access point AP, where the measurement notification message carries identifier information of a channel that needs to be measured.

The measurement notification message may be a TF-S (Trigger Frame for Sounding), which is a trigger frame used for scheduling channel measurement. The measurement notification message is used to indicate, for the STA, channels that need to be measured. The identifier information of the channel that needs to be measured is generally a bandwidth indication. For example, two bits are used to indicate bandwidth: 00 represents 20 MHz, 01 represents 40 MHz, 01 represents 80 MHz, and 11 represents 80+80/160 MHz. Alternatively, the identifier information may be a bit table. For example, 1101 represents that a first 20 MHz channel, a second 20 MHz channel, and a third 20 MHz channel need to be measured, which are corresponding to a 60 MHz channel. That is, each bit is corresponding to 20 MHz bandwidth, and 1/0 respectively represents that measurement is required/not required.

In addition, the measurement notification message carries an ID (Identifier, identifier) of a STA that needs to perform channel measurement. The ID herein may be an AID (Association Identifier, association identifier) or a PAID (Partial Association Identifier, partial association identifier). Specifically, STAs to be scheduled may be represented by using a STA ID list, that is, IDs of the STAs to be scheduled are listed one by one; or may be represented by using a Group ID. However, when the STAs to be scheduled are indicated by using the Group ID, the AP is required to create a group in advance. Compared with use of the Group ID, use of the STA ID list provides higher flexibility.

The measurement notification message further carries an LTF (Long Training Field, long training field) quantity indication field, which is used to indicate a quantity of LTFs included in a sounding reference signal sent by the STA. The LTF may be an HE-LTF (High Efficiency WLAN-Long Training Field, high efficiency wireless local area network-long training field). Specifically, if the measurement notification message indicates that N STAs need to perform channel measurement, the measurement notification message carries one HE-LTF quantity indication field, which is used to indicate a quantity of HE-LTF fields included in the sounding reference signal sent by the STA that needs to perform channel measurement. Alternatively, the measurement notification message carries N HE-LTF quantity indication fields, where the N HE-LTF quantity indication fields are in a one-to-one correspondence with the N STAs that need to perform channel measurement, and are used to indicate quantities of HE-LTF fields included in sounding reference signal frames sent by the STAs corresponding to the HE-LTF quantity indication fields.

In specific implementation, if the measurement notification message carries N HE-LTF quantity indication fields, each HE-LTF quantity indication field is corresponding to one STA. If the measurement notification message carries one HE-LTF quantity indication field, it indicates that sounding reference signals sent by all STAs include a same quantity of HE-LTFs. If a quantity of antennas of a STA is less than an HE-LTF quantity indicated by the AP, HE-LTFs may be replicated for use, so that the AP can measure a channel more accurately by using the replicated HE-LTFs. For example, if an HE-LTF quantity indication field carried in the measurement notification message is 4, a STA 1 has two antennas (A and B), and all the four HE-LTFs need to be simultaneously sent by using the antenna A and the antenna B. Each HE-LTF is corresponding to a group of weighting coefficients (that is, a column in a matrix P), and weighting coefficients corresponding to the HE-LTFs are different. If columns in the matrix P are insufficient, the columns in the matrix P may be cyclically used.

In addition, the measurement notification message further carries a transmission duration indication field, where the transmission duration indication field is used to indicate expected duration between a moment at which transmission of the measurement notification message ends and a moment at which a whole channel measurement process is completed. In specific implementation, the transmission duration indication field may be TXOP (Transmission Opportunity, transmit opportunity) duration, which represents expected duration between a moment at which transmission of a TF-S ends and a moment at which a whole channel measurement process is completed.

102. The STA sends a sounding reference signal by using M idle sub-channels, so that the AP measures the M idle sub-channels according to the received sounding reference signal, where the M idle sub-channels are M idle sub-channels determined by the STA from a channel indicated in the identifier information of the channel that needs to be measured, and M is an integer greater than or equal to 1.

The sounding reference signal may be a sounding. The sounding is a relatively short frame, and carries one or more HE-LTFs. A receive end completes channel measurement by receiving these HE-LTFs. The idle sub-channel is a sub-channel whose physical carrier sense (that is, CCA (Clear Channel Assessment, clear channel assessment)) result and virtual carrier sense (that is, NAV (Network Allocation Vector, network allocation vector)) result are both idle (idle). That the physical carrier sense result is idle means that the STA does not obtain, by means of sense on the sub-channel, a signal whose power exceeds a specific threshold. That the virtual carrier sense result is idle means that no other STAs reserve the sub-channel by means of RTS/CTS (Request To Send/Clear To Send, request to send/clear to send) in advance.

Compared with an existing UL channel measurement mechanism in LTE, in the channel measurement method provided in the present invention, the STA selects, in a channel specified by the AP, an idle sub-channel for the STA to send a sounding, so as to prevent transmission being performed in an OBSS from being affected.

For example, the AP instructs, by using the measurement notification message, a STA to measure an 80 MHz channel. However, a STA finds that only 40 MHz bandwidth is available, and a device in a neighboring cell is sending a signal (a CCA result is busy) on the other two 20 MHz bandwidth, or another STA reserves the other two 20 MHz bandwidth by exchanging an RTS frame, a CTS frame, or the like in advance (an NAV value is greater than 0). Therefore, the STA sends a sounding only on the available 40 MHz bandwidth. In addition, in subsequent scheduling of data transmission, the AP cannot schedule the STA on sub-channels on which the STA does not send a sounding.

In addition, in specific implementation, the STA determines, from at least one sub-channel included in the channel indicated in the identifier information of the channel that needs to be measured, the M idle sub-channels by using the following methods.

Method 1: The STA performs clear channel assessment CCA on each sub-channel supported by both the AP and the STA, and determines a sub-channel whose CCA result is idle as an available sub-channel; and determines M sub-channels that are in the channel indicated in the identifier information and that are the same as the available sub-channel as the M idle sub-channels.

"the sub-channel supported by both the AP and the STA" may be, for example: The AP supports 80 MHz, and a STA supports only 40 MHz. In this case, "the sub-channel supported by both the AP and the STA" is actually an intersection of channel bandwidth supported by the STA and channel bandwidth supported by the AP, that is, the 40 MHz bandwidth supported by the STA. In this case, the STA can perform CCA only on the 40 MHz bandwidth.

In addition, an intersection of the available sub-channel and the at least one sub-channel included in the channel indicated by the AP is determined as the M idle sub-channels.

In specific implementation, the STA determines, according to a CCA result before a trigger frame is received, whether the channel is busy or idle. That is, after receiving a TF-S, the STA enters a ready-to-send state, and does not perform CCA until sending of the sounding is completed.

Method 2: The STA performs, in first preset duration after receiving the measurement notification message, CCA on each sub-channel in the channel indicated in the identifier information, and determines M sub-channels whose CCA results are idle as the M idle sub-channels.

In specific implementation, the STA performs CCA in an inter-frame interval between receiving of the TF-S and sending of the sounding. The interval between the TF-S and the sounding is generally an SIFS (which is 10 µs on a 2.4 GHz band and 16 µs on a 5 GHz band). The STA needs to complete aRxRFDelay (that is, radio frequency receive delay), aRxPLCPDelay (that is, PLCP receive delay), aMACProcessingDelay (that is, MAC processing delay), and aRxTxTurnaroundTime (that is, receiving/transmitting conversion) in this duration, and it takes at least 4 µs for the STA to perform CCA. Therefore, a time of the SIFS may be insufficient for the STA to complete the CCA. In this case, the SIFS may be extended. For example, the SIFS is increased by one timeslot (which is 9 µs or 20 µs on the 2.4 GHz band, and is 9 µs on a 5 GHz band), and is extended to a PIFS, so that the STA can complete the CCA.

In addition, in Method 1 and Method 2, after determining the M idle sub-channels, the STA may further send a CTS frame at a first moment by using the M idle sub-channels. The first moment is a moment obtained by adding up a moment at which the STA receives the measurement notification message and second preset duration. Generally, the first preset duration and the second preset duration may be the same.

A reason for the STA to send the CTS after determining the M idle sub-channels is that, in duration after the STA completes the CCA and before the STA really sends the sounding, it is still possible that a third-party Wi-Fi device sends a signal. To ensure that the M idle sub-channels determined by the STA are definitely idle when the STA sends the sounding, the STA sends the CTS frame immediately after receiving the TF-S. In this case, another STA sets an NAV timer, and reserves the M idle sub-channels before sending a sounding, thereby ensuring that M idle sub-channels are available for later use. The TF-S includes TXOP duration, which represents expected duration between a moment at which transmission of the TF-S ends and a moment at which a whole channel measurement process is completed. The CTS frame includes a duration field, and a value of the duration field is set to be a difference obtained by subtracting the second preset duration and a transmission time of the CTS frame from the TXOP duration in the received TF-S. A specific operation is: After receiving the TF-S, each scheduled STA sends, on M idle sub-channels determined by the STA, a CTS frame after an interval of second preset duration. In addition, these CTS frames are required to include the same content, and use same MCSs and same scrambling codes, so as to ensure that these CTS frames can be correctly received after these CTS frames are superimposed.

As shown in FIG. 2, a CTS frame structure includes a frame control (frequency control) field, a duration (duration) field, an RA field, and an FCS field. RA fields in all CTS frames sent by STAs are set to a BSSID (which is generally a MAC address of the AP), so as to ensure that the CTS frames have same content. The duration field may be set according to the TXOP (Transmission Opportunity, transmit opportunity) duration in the TF-S. The TXOP duration represents the expected duration between the moment at which transmission of the TF-S ends and the moment at which the whole channel measurement process is completed. The duration in the CTS frame is set to: TXOP duration - (Second preset duration) - (Transmission time of a CTS frame) - (IFS between a CTS frame and a sounding). If the TF-S does not include the TXOP duration, the duration in the CTS frame may set to: N × (Inter-sounding IFS + Sounding time). N is a quantity of currently scheduled STAs, and may be obtained according to the TF-S. The sounding time is a time-domain length of a sounding frame, and may be obtained according to a sounding frame structure and a quantity of HE-LTFs in the TF-S.

Method 3: The STA determines, according to the HE-LTF quantity indication field carried in the measurement notification message, a STA queue, and the moment at which the STA receives the measurement notification message, a last STA that sends a sounding reference signal, and a third moment at which sending of the sounding reference signal by the last STA that sends the sounding reference signal ends.

The STA queue is obtained by sorting, according to a sequence of IDs that are of the STAs and that appear in the measurement notification message, the STAs that need to perform channel measurement. For example, if a sequence of STAs that need to perform channel measurement and that appear in the measurement notification message is A, B, C, and D, where A, B, C, and D are respectively identifiers of a STA 1, a STA 2, a STA 3, and a STA 4, a STA queue determined herein is STA 1, STA 2, STA 3, STA 4. In addition, the last STA that sends the sounding reference signal is a preceding STA that is in the STA queue and that is adjacent to the STA.

The STA performs CCA in a time interval between the third moment and the second moment, and determines the M sub-channels whose CCA results are idle as the M idle sub-channels. The second moment is a moment that is determined by the STA according to the HE-LTF quantity indication field carried in the measurement notification message and the STA queue, and at which the STA sends the sounding. In this method, a first STA that sends a sounding performs CCA in an interval between receiving of a measurement notification message and sending of the sounding by the STA.

FIG. 3 (a) shows a frame structure of a sounding reference signal according to an embodiment of the present invention. L-STF to HEW-SIG-A of the sounding are replicated and sent on each 20 MHz sub-channel of bandwidth indicated in a bandwidth indication field. HE-STF and HE-LTFs may also be replicated and sent on each 20 MHz sub-channel in the bandwidth indicated in the bandwidth indication field, or may be sent on the whole bandwidth indicated in the bandwidth indication field in full bandwidth. A quantity of HE-LTFs included in the frame structure of the sounding reference signal sent by the STA is determined according to the HE-LTF quantity indication field in the measurement notification message received by the STA.

With reference to FIG. 3 (a), the following describes in detail how the STA determines the second moment and the third moment.

First, the STA determines, according to the STA queue, that the STA is an Xth STA that needs to send a sounding. For example, if the STA queue is A, B, C, and D, and an ID of the STA is B, it may be determined that the STA is a second STA that needs to send a sounding.

Second, the STA calculates, according to the HE-LTF quantity indication field and the moment at which the measurement notification message is received, a moment at which the last STA that needs to send a sounding sends the sounding. For example, if the moment at which the measurement notification message is received is X, a moment obtained by adding up the moment at which the measurement notification message is received and a preset interval (which is generally an SIFS) is a moment Y at which a first STA sends a sounding. With reference to FIG. 3 (a), it can be learned that in any sounding frame, a length from an L-STF to an HE-STF is fixed, a length of the sounding frame is determined according to an HE-LTF quantity indication field, and Moment Y + Preset duration + Length from an L-STF to an HE-STF + Length of N HE-LTFs indicated in the HE-LTF quantity indication field = Moment at which sending of the sounding by the first STA ends. Likewise, the third moment at which sending of the sounding reference signal by the last STA that sends the sounding reference signal ends may be obtained.

Finally, a moment obtained by adding up the third moment and the preset duration is the moment at which the STA sends the sounding reference signal, that is, the second moment.

It needs to be noted herein that Method 3 for determining the M idle sub-channels is applicable only to a scenario in which each STA sends a sounding reference signal in a TDM (Time Division Multiplexing, time division multiplex) manner, and is inapplicable to a scenario in which each STA sends a sounding reference signal in a CDM (Code Division Multiplexing, code division multiplex) manner.

It should be noted that in Method 2 and Method 3 in this embodiment, the M idle sub-channels may be all sub-channels that are in the channel indicated in the identifier information and whose CCA results are idle, or may be some sub-channels of all the sub-channels that are in the channel indicated in the identifier information and whose CCA results are idle. The former case is applicable to a scenario in which discontinuous channel transmission is allowed. For example, the channel indicated in the identifier information includes four sub-channels (sub-channels 1, 2, 3, and 4), and a result of CCA performed by the STA is that three sub-channels (the sub-channels 1, 3, and 4) are idle, and in this case, the STA sends a sounding on the sub-channels 1, 3, and 4. For the latter case, a specific method is: The STA sends a sounding on continuous channels that include a primary channel. For example, the channel indicated in the identifier information includes four sub-channels (sub-channels 1, 2, 3, and 4), a result of CCA performed by the STA is that three sub-channels (the sub-channels 1, 3, and 4) are idle, and it is assumed that a primary channel (Primary Channel) in a current BSS is the sub-channel 3, and in this case, the STA may send a sounding only on the sub-channel 3 and the sub-channel 4. An advantage of this is that channels used by the STA to send the sounding are always continuous, thereby simplifying receiving processing on an AP side. Optionally, it may further be restricted that the STA may send a sounding only on continuous 20/40/80/160 MHz channels that include a primary channel. For example, the channel indicated in the identifier information includes four sub-channels (sub-channels 1, 2, 3, and 4), a result of CCA performed by the STA is that three sub-channels (the sub-channels 1, 2 and 3) are idle, and it is assumed that a primary channel (Primary Channel) in a current BSS is the sub-channel 1, and in this case, the STA sends a sounding only on the sub-channel 1 and the sub-channel 2, but does not send the sounding on the sub-channel 3. An advantage of this is that current physical signal sequence designs for the 20/40/80/160 MHz channels may be reused, without a need to redesign physical signal sequences corresponding to bandwidth such as 60/100/120/140 MHz. The physical signal sequence is frequency-domain sequences of a short training field (Short Training Field, STF) and a long training field (Long Training Field, LTF) in a physical header, for example, frequency-domain sequences of an HE-STF and an HE-LTF shown in FIG. 3 (a).

Particularly, in Method 1, the M idle sub-channels may be all sub-channels of sub-channels that are in the channel indicated in the identifier information and that are the same as the available sub-channel, or may be some sub-channels of all the sub-channels that are in the channel indicated in the identifier information and that are the same as the available sub-channel. For example, sub-channels supported by both the AP and the STA are sub-channels 1 to 8, available sub-channels include sub-channels 1, 2, 3, 5, 7, and 8, and the channel indicated in the identifier information includes sub-channels 1 to 4, and in this case, all sub-channels of sub-channels that are in the channel indicated in the identifier information and that are the same as the available sub-channels are the sub-channels 1 to 3. It is assumed that the primary channel is the sub-channel 1, and bandwidth of each sub-channel is 20 MHz. Similar to Method 2 and Method 3, the some sub-channels of all the sub-channels that are in the channel indicated in the identifier information and that are the same as the available sub-channels may be continuous channels that are of all the sub-channels and that include the primary channel, that is, the sub-channels 1 to 3; or optionally, may be continuous 20/40/80/160 MHz channels that are of all the sub-channels and that include the primary channel, that is, the sub-channels 1 and 2.

In addition, it needs to be noted that before performing CCA, the STA needs to determine that a network allocation vector NAV of a sub-channel on which CCA needs to be performed is 0. That is, in the present invention, each STA that needs to perform channel measurement is required to monitor and record a channel reservation (Reservation) status of each sub-channel of M idle sub-channels determined by the STA. In the current 802.11 standard, recording of channel reservation (that is, an NAV mechanism) is performed for a primary channel (Primary Channel). That is, the STA maintains only one NAV timer, and a value of the NAV timer is determined according to sense on the primary channel. Obviously, this cannot meet a requirement of the present invention. Therefore, in the present invention, the STA is required to maintain an NAV timer for each of the M idle sub-channels, and the STA may determine, according to a value of a corresponding NAV timer, whether a virtual carrier sense result of a sub-channel is busy or idle. If a value of the NAV timer is 0, the sub-channel is idle; or if a value of the NAV timer is not 0, the sub-channel is busy. In addition, the STA may perform virtual carrier sense to determine whether a sub-channel is idle when the STA is about to send a sounding, without a need to determine in advance whether the sub-channel is idle.

In an embodiment of the present invention, the measurement notification message may further carry at least one of the following: (1) a frame type indication field, which indicates that the current measurement notification message is a TF-S; (2) a first power indication field, where the first power indication field is used to indicate power used by the AP to send the measurement notification message; (3) a second power indication field, where the second power indication field is used to indicate power used by the STA to send the sounding reference signal, or expected power or an expected power density when the sounding reference signal sent by the STA reaches the AP; (4) TXOP duration, where the TXOP duration is used to indicate a total time length of a sounding phase, timing of the TXOP duration starts when transmission of the TF-S ends, and the TXOP duration is used for transmission protection; or (5) a sounding reference signal type indication, which is used to indicate a specific type of an NDP sounding sent by the STA: a legacy NDP sounding type or an HEW NDP sounding type.

It needs to be noted that the measurement notification message may carry only one of the first power indication field or the second power indication field.

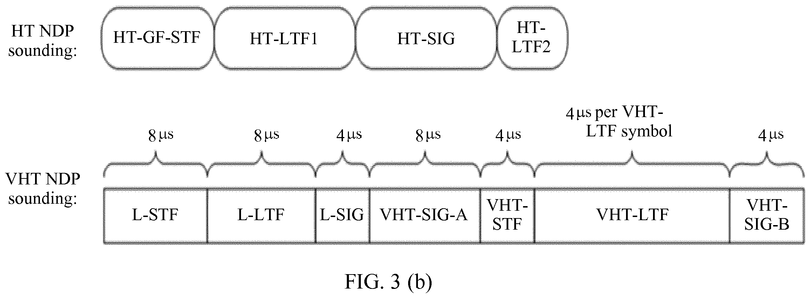

It needs to be noted that the sounding reference signal type indication carried in the measurement notification message is intended to reduce transmission overheads in a UL channel measurement process. A legacy NDP sounding is shorter than an HEW NDP sounding, and requires much fewer transmission overheads. However, in a scenario in which delay spread is relatively high (for example, an outdoor scenario), an HEW NDP sounding needs to be used, so as to complete relatively accurate channel measurement. In addition to a difference between the lengths, a main difference between the legacy NDP sounding and the HEW NDP sounding is that a length of an LTF symbol (an LTF following an SIG field) of the legacy NDP sounding is less than that of an HE-LTF symbol of the HEW NDP sounding. That is, on same bandwidth, a quantity of subcarriers included in one HE-LTF symbol is greater than a quantity of subcarriers included in an LTF (the LTF following an SIG field) of the HEW NDP sounding. This is applicable to measurement in a high delay spread scenario. For example, a quantity of subcarriers included in each symbol in 802.11ax is four times a quantity of subcarriers included in each symbol in 802.11n. This requires measurement on more subcarriers. Therefore, the HE-LTF needs to include more subcarriers. When the AP determines that a scheduled STA has relatively low delay spread, the AP may instruct, by using the measurement notification message, the STA to send a legacy NDP sounding for channel measurement, so as to reduce transmission overheads. If the delay spread is relatively high, the AP instructs the STA to send an HEW NDP sounding. A structure of the HEW NDP sounding is shown in FIG. 3 (a). As shown in FIG. 3 (b), the legacy NDP sounding may be an HT NDP sounding (802.11n) or a VHT NDP sounding (802.11ac).

In an embodiment of the present invention, the sounding reference signal may further carry at least one of the following: (1) a signal type indication field, which is used to indicate that the current sounding reference signal is an NDP sounding; (2) a bandwidth indication field, where the bandwidth indication field is used to indicate bandwidth of an idle sub-channel used for sending the sounding reference signal; (3) a third power indication field, where the third power indication field is used to indicate power used for sending the sounding reference signal; or (4) a resource request field, where the resource request field is used to indicate a volume of data that needs to be transmitted by the STA for sending the sounding reference signal, that is, a data buffer/queue size (Buffer/Queue size), or a time requested by the STA for data transmission (TXOP Duration Requested).

The bandwidth indication field is generally a bandwidth indication. For example, two bits are used to indicate bandwidth: 00 represents 20 MHz, 01 represents 40 MHz, 01 represents 80 MHz, and 11 represents 80+80/160 MHz. Alternatively, the bandwidth indication field may be a bit table. For example, 1101 represents that a first 20 MHz channel, a second 20 MHz channel, and a third 20 MHz channel need to be measured, which are corresponding to a 60 MHz channel. That is, each bit is corresponding to 20 MHz bandwidth, and 1/0 respectively represents that measurement is required/not required.

It needs to be noted that if the measurement notification message carries the first power indication field or the second power indication field, the sounding reference signal does not need to carry the third power indication field.

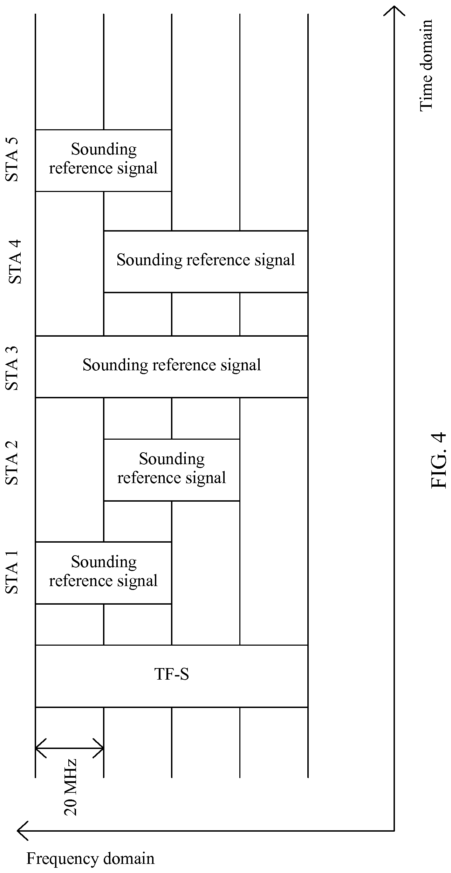

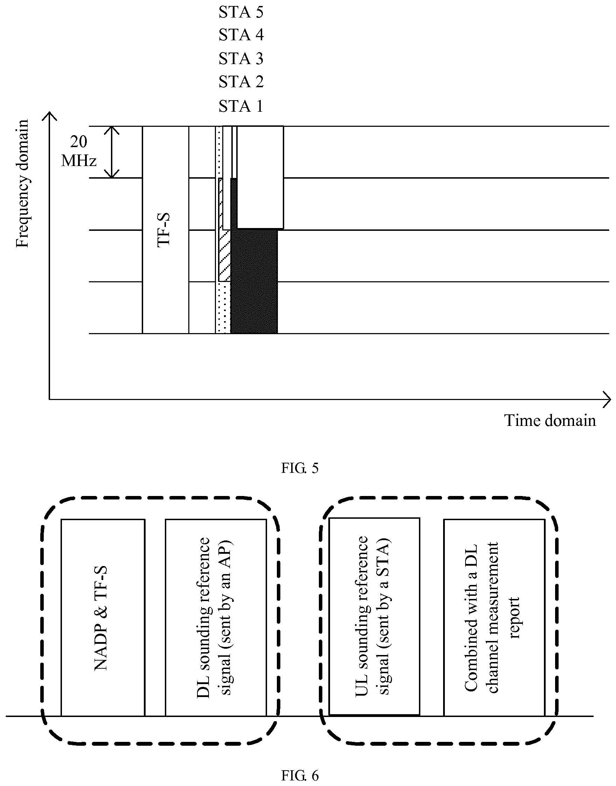

In another embodiment of the present invention, after receiving the measurement notification message sent by the AP, the STA sends a sounding reference signal in the two following manners.
(1) TDM: As shown in FIG. 4, STAs send a sounding reference signal (Sounding) at different times according to a measurement notification message (TF-S).
   Specifically, after receiving the TF-S, the STA determines, according to the STA queue (the STA queue is obtained by sorting, according to the sequence of the IDs that are of the STAs and that appear in the measurement notification message, the STAs that need to perform channel measurement), a sequence at which the STA sends the sounding. If IDs that are in the measurement notification message and that are of the STAs that need to perform channel measurement are implemented by using a STA ID list, a sending sequence is determined according to a sequence in the STA ID list. For example, if an ID of a STA sorts fifth in the STA ID list, the STA is a fifth STA that needs to send a sounding. If "identifiers of scheduled STAs" are implemented by using a group ID, a sequence of all STAs is specified when a group is created.
   It may be found according to the frame structure design of the sounding reference signal (sounding) shown in FIG. 3 (a) that except the quantity of the HE-LTFs, quantities of other fields in the sounding are fixed. Therefore, a frame length of each sounding may be determined with reference to an "LTF quantity indication field" in the TF-S, and then a time at which a STA needs to send a sounding may be determined. According to a current standard, scheduling information of different STAs that is in the TF-S may be separately obtained by performing CRC independently and/or encoding independently, and one STA needs to correctly receive only scheduling information of the STA. In this case, the STA may be incapable of obtaining, by parsing, scheduling information of all STAs that come before the STA, and therefore cannot calculate a time at which the STA sends a sounding.
   If a quantity of HE-LTFs is specified for each STA, a STA may be incapable of obtaining an HE-LTF of any preceding STA. However, when CRC is independently performed on scheduling information of each STA, if the TF-S includes only one LTF quantity indication field, the LTF quantity indication is located in a common part that precedes scheduling information of all STAs in the measurement notification message, and each STA may obtain, by parsing, a STA sequence without a need to obtain specific scheduling information of the STA. Therefore, in this scenario, a solution in which the TF-S includes only one LTF quantity indication field is better. Certainly, if CRC is jointly performed on scheduling information of different users, a solution in which different HE-LTF quantities are specified for different STAs is still feasible.
(2) CDM: As shown in FIG. 5, each STA sends a sounding simultaneously on an idle sub-channel determined by the STA from a channel indicated by the AP, and before the sending, each STA needs to multiply the sounding by one of CDM codes that are orthogonal to each other (this operation starts from an L-LTF of the sounding), so that the AP can distinguish between soundings of different STAs.

In this way, a time-domain length of each sounding is greater than that of a single sounding in the TDM. However, because inter-frame intervals in the TDM are reduced, transmission duration may be generally less than that required in the TDM solution. In the CDM solution, because all soundings are aligned in a time domain, the AP needs to specify only one HE-LTF in the TF-S.

It needs to be noted that a channel measurement mechanism provided in this embodiment of the present invention may further be combined with another mechanism, which specifically includes the following.

### (1) Combined with a DL channel measurement mechanism

As shown in FIG. 6, the channel measurement method in the present invention may be combined with a DL channel measurement mechanism in 802.11ac. An existing DL channel measurement mechanism, that is, an NDPA (Null Data Packet Announcement, null data packet announcement) broadcast by an AP includes a list of STAs that are required to feed back channel measurement results. The AP sends an NDP sounding to a STA (the STA is configured to measure a channel sounding reference signal in a downlink channel), so that the STA measures the downlink channel. Subsequently, the AP requires, by using a polling (Poll) mechanism, each STA to feed back a channel measurement result.

The channel measurement method provided in the present invention is combined with the DL channel measurement mechanism, so that uplink channel measurement may also be performed in addition to downlink channel measurement. This requires that the NDPA includes not only a measurement user set S 1 of the DL channel whose channel measurement result needs to be fed back, but also a measurement user set S2 of a UL channel that needs to be used for sending a UL sounding. The S 1 and the S2 may be completely the same, may have no intersection, or may have a partial intersection. This is equivalent to that an NDPA frame used for DL channel measurement and a TF-S used for UL channel measurement are combined into one frame NDPA & TF-S. If S1=S2, the NDPA & TF-S needs to include only one user list. Specifically, the AP sends an NDP sounding (that is, a DL sounding reference signal in FIG. 6) for DL channel measurement. Alternatively, the NDP sounding and the NDPA & TF-S may be combined into one frame. Subsequently, the STA sends a UL sounding (the sounding reference signal sent by the STA). The STA may first feed back a DL channel measurement result to the AP, and then send the UL sounding to the AP. Alternatively, the STA may first send the UL sounding to the AP, and then feed back a DL channel measurement result to the AP. If S1=S2, or the S1 and the S2 have a partial intersection, even a UL sounding measurement report and a DL channel measurement report of a same STA may be combined into one frame. That is, a MAC part is added to the UL sounding frame sent by the STA, so as to carry the DL channel measurement report.

### (2) Combined with an MU-RTS/CTS mechanism

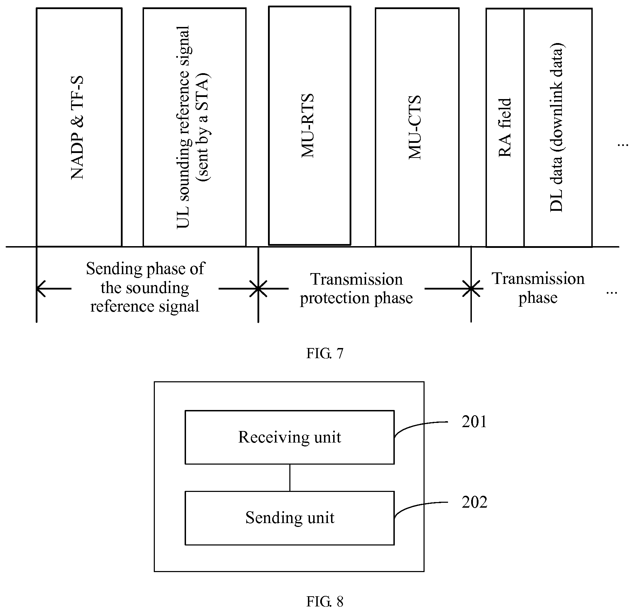

Generally, the MU-RTS/CTS mechanism is used to protect subsequent DL transmission. A current MU-RTS/CTS mechanism has a problem that even the AP may determine, according to receiving of CTS frames, STAs that do not return a CTS frame (that is, STAs that fail to correctly receive an MU-RTS frame, or STAs that are in a dormant state), resource allocation cannot be adjusted in a time period between receiving of the CTS frame and subsequent sending of downlink data. This causes a waste of some resources. As shown in FIG. 7, according to the method provided in the present invention, the AP may determine, according to receiving of UL soundings, STAs that can correctly receive data from the AP. Therefore, resources may be reallocated in a whole MU-RTS/CTS execution period (that is, a transmission protection period in FIG. 7), so that the resources are used more effectively.

According to the channel measurement method provided in the present invention, the STA receives the measurement notification message sent by the AP, where the measurement notification message carries the identifier information of the channel that needs to be measured, and determines the M idle sub-channels from the at least one sub-channel included in the channel indicated in the identifier information of the channel that needs to be measured; and the STA sends the sounding reference signal by using the M idle sub-channels, so that the AP measures the M idle sub-channels according to the received sounding reference signal. Compared with the prior art in which the STA sends a sounding reference signal on a channel indicated by the AP, and the AP does not know channels that are occupied by a BSS surrounding the STA, and consequently, the STA may send a sounding on an occupied channel, further causing interference to transmission being performed in an OBSS, in the present invention, the STA selects, in a channel specified by the AP, an idle sub-channel for the STA to send a sounding, so that it can be ensured that the sub-channel on which channel measurement is performed is idle, thereby preventing, to some extent, transmission in an OBSS from being affected by UL channel measurement.

### Embodiment 2

An embodiment of the present invention provides a STA. As shown in FIG. 8, the STA includes a receiving unit 201 and a sending unit 202.

The receiving unit 201 is configured to receive a measurement notification message sent by an access point AP, where the measurement notification message carries identifier information of a channel that needs to be measured.

The measurement notification message may be a TF-S (Trigger Frame for Sounding), which is a trigger frame used for scheduling a measurement notification message. The measurement notification message is used to indicate, for the STA, channels that need to be measured.

In addition, the measurement notification message carries an ID of a STA that needs to perform channel measurement. The ID herein may be an AID or a PAID. Specifically, STAs to be scheduled may be represented by using a STA ID list, that is, IDs of the STAs to be scheduled are listed one by one; or may be represented by using a Group ID. However, when the IDs of the STAs are represented by using the Group ID, the AP is required to create a group in advance. Compared with use of the Group ID, use of the STA ID list provides higher flexibility.

The sending unit 202 is configured to send a sounding reference signal by using M idle sub-channels, so that the AP measures the M idle sub-channels according to the received sounding reference signal, where the M idle sub-channels are M idle sub-channels determined by the STA from a channel indicated in the identifier information of the channel that needs to be measured, and M is an integer greater than or equal to 1.

The sounding reference signal may be a sounding. The idle sub-channel is a sub-channel whose physical carrier sense (that is, CCA) result and virtual carrier sense (that is, NAV) result are both idle (idle). That the physical carrier sense result is idle means that the STA does not obtain, by means of sense on the sub-channel, a signal whose power exceeds a specific threshold. That the virtual carrier sense result is idle means that no other STAs reserve the sub-channel by means of RTS/CTS in advance.

Compared with an existing UL channel measurement mechanism in LTE, in the channel measurement method provided in the present invention, the STA selects, in a channel specified by the AP, an idle sub-channel for the STA to send a sounding, so as to prevent transmission being performed by an OBSS device from being affected.

For example, the AP instructs, by using the measurement notification message, a STA to measure an 80 MHz channel. However, a STA finds that only 40 MHz bandwidth is available, and a device in a neighboring cell is sending a signal (a CCA result is busy) on the other two 20 MHz bandwidth, or another STA reserves the other two 20 MHz bandwidth by exchanging an RTS frame, a CTS frame, or the like in advance (an NAV value is greater than 0). Therefore, the STA sends a sounding only on the available 40 MHz bandwidth. In addition, in subsequent scheduling of data transmission, the AP cannot schedule the STA on sub-channels on which the STA does not send a sounding.

It needs to be noted that the measurement notification message further carries an identifier ID of the STA that needs to perform channel measurement.

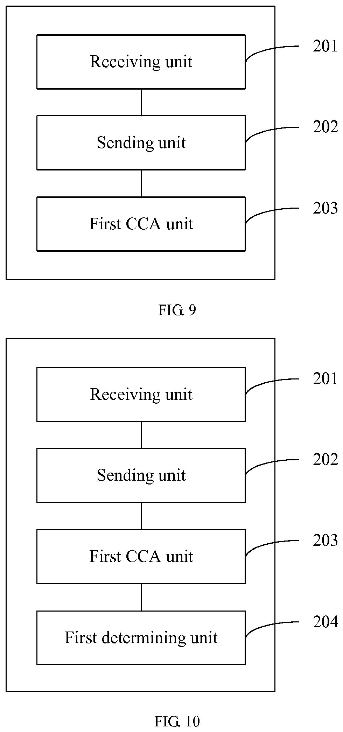

As shown in FIG. 9, the STA further includes a first clear channel assessment CCA unit 203.

The first CCA unit is configured to: perform clear channel assessment CCA on each sub-channel supported by both the AP and the STA, and determine a sub-channel whose CCA result is idle as an available sub-channel.

As shown in FIG. 10, the STA further includes a first determining unit 204.

The first determining unit is specifically configured to determine M sub-channels that are of at least one sub-channel included in the channel indicated by the AP and that are the same as the available sub-channel as the M idle sub-channels.

In addition, the STA further includes a second determining unit and a second CCA unit.

The second CCA unit is configured to perform, in first preset duration after the receiving unit receives the measurement notification message, CCA on each sub-channel in the channel indicated in the identifier information.

The second determining unit is configured to determine M sub-channels whose CCA results are idle as the M idle sub-channels.

The sending unit 202 is further configured to: after the determining the M idle sub-channels, send a clear to send CTS frame by using the M idle sub-channels at a first moment, where the first moment is a moment obtained by adding up a moment at which the STA receives the measurement notification message and second preset duration.

It needs to be noted that the measurement notification message further carries an LTF quantity indication field, and the LTF may be an HE-LTF.

The STA further includes a third determining unit.

The third determining unit is configured to determine, according to the HE-LTF quantity indication field carried in the measurement notification message, a STA queue, and a moment at which the STA receives the measurement notification message, a second moment at which the STA sends the sounding reference signal, where the STA queue is obtained by sorting, according to a sequence of IDs that are of the STAs and that appear in the measurement notification message, the STAs that need to perform channel measurement.

The third determining unit is further configured to: before the sending unit sends the sounding reference signal by using the M idle sub-channels, determine, according to the HE-LTF quantity indication field carried in the measurement notification message, the STA queue, and the moment at which the STA receives the measurement notification message, a last STA that sends a sounding reference signal, and a third moment at which sending of the sounding reference signal by the last STA that sends the sounding reference signal ends. The last STA that sends the sounding reference signal is a preceding STA that is in the STA queue and that is adjacent to the STA.

The STA further includes a second CCA unit.

The second CCA unit is configured to: perform CCA in a time interval between the third moment and the second moment, and determine M sub-channels whose CCA results are idle as the M idle sub-channels.

It should be noted that in implementation of the second determining unit and the third determining unit in this embodiment, the M idle sub-channels may be all sub-channels that are in the channel indicated in the identifier information and whose CCA results are idle, or may be some sub-channels of all the sub-channels that are in the channel indicated in the identifier information and whose CCA results are idle. The former case is applicable to a scenario in which discontinuous channel transmission is allowed. For example, the channel indicated in the identifier information includes four sub-channels (sub-channels 1, 2, 3, and 4), and a result of CCA performed by the STA is that three sub-channels (the sub-channels 1, 3, and 4) are idle, and in this case, the STA sends a sounding on the sub-channels 1, 3, and 4. For the latter case, a specific method is: The STA sends a sounding on continuous channels that include a primary channel. For example, the channel indicated in the identifier information includes four sub-channels (sub-channels 1, 2, 3, and 4), a result of CCA performed by the STA is that three sub-channels (the sub-channels 1, 3, and 4) are idle, and it is assumed that a primary channel (Primary Channel) in a current BSS is the sub-channel 3, and in this case, the STA may send a sounding only on the sub-channel 3 and the sub-channel 4. An advantage of this is that channels used by the STA to send the sounding are always continuous, thereby simplifying receiving processing on an AP side. Optionally, it may further be restricted that the STA may send a sounding only on continuous 20/40/80/160 MHz channels that include a primary channel. For example, the channel indicated in the identifier information includes four sub-channels (sub-channels 1, 2, 3, and 4), a result of CCA performed by the STA is that three sub-channels (the sub-channels 1, 2 and 3) are idle, and it is assumed that a primary channel (Primary Channel) in a current BSS is the sub-channel 1, and in this case, the STA sends a sounding only on the sub-channel 1 and the sub-channel 2, but does not send the sounding on the sub-channel 3. An advantage of this is that current physical signal sequence designs for the 20/40/80/160 MHz channels may be reused, without a need to redesign physical signal sequences corresponding to bandwidth such as 60/100/120/140 MHz. The physical signal sequence is frequency-domain sequences of a short training field (Short Training Field, STF) and a long training field (Long Training Field, LTF) in a physical header, for example, frequency-domain sequences of an HE-STF and an HE-LTF shown in FIG. 3 (a).

Particularly, in the implementation of the first determining unit, the M idle sub-channels may be all sub-channels of sub-channels that are in the channel indicated in the identifier information and that are the same as the available sub-channel, or may be some sub-channels of all the sub-channels that are in the channel indicated in the identifier information and that are the same as the available sub-channel. For example, sub-channels supported by both the AP and the STA are sub-channels 1 to 8, available sub-channels include sub-channels 1, 2, 3, 5, 7, and 8, and the channel indicated in the identifier information includes sub-channels 1 to 4, and in this case, all sub-channels of sub-channels that are in the channel indicated in the identifier information and that are the same as the available sub-channels are the sub-channels 1 to 3. It is assumed that the primary channel is the sub-channel 1, and bandwidth of each sub-channel is 20 MHz. Similar to the implementation of the second determining unit and third determining unit, the some sub-channels of all the sub-channels that are in the channel indicated in the identifier information and that are the same as the available sub-channels may be continuous channels that are of all the sub-channels and that include the primary channel, that is, the sub-channels 1 to 3; or optionally, may be continuous 20/40/80/160 MHz channels that are of all the sub-channels and that include the primary channel, that is, the sub-channels 1 and 2.

The STA further includes a network allocation vector NAV monitoring unit.

The NAV monitoring unit is configured to: before CCA is performed, determine that an NAV of a sub-channel on which the CCA is to be performed is 0.

It needs to be noted that the measurement notification message indicates that N STAs need to perform channel measurement, and N is an integer greater than or equal to 1. The measurement notification message carries one HE-LTF quantity indication field, which is used to indicate a quantity of HE-LTF fields included in the sounding reference signal sent by the STA that needs to perform channel measurement.

Alternatively, the measurement notification message carries N HE-LTF quantity indication fields, where the N HE-LTF quantity indication fields are in a one-to-one correspondence with the N STAs that need to perform channel measurement, and are used to indicate quantities of HE-LTF fields included in sounding reference signal frames sent by the STAs corresponding to the HE-LTF quantity indication fields.

If the measurement notification message carries one HE-LTF quantity indication field, the sounding reference signal sent by the STA includes X HE-LTFs, where X is a quantity indicated in the HE-LTF quantity indication field.

If the measurement notification message carries N HE-LTF quantity indication fields, the sounding reference signals sent by the STAs include Y HE-LTFs, where Y is a quantity indicated in the HE-LTF quantity indication fields corresponding to the STAs.

In addition, the sounding reference signal further includes a bandwidth indication field, where the bandwidth indication field is used to indicate bandwidth of an idle sub-channel that is used to send the sounding reference signal.

The measurement notification message further includes a first power indication field, where the first power indication field is used to indicate power used by the AP to send the measurement notification message. Alternatively, the measurement notification message further includes a second power indication field, where the second power indication field is used to indicate power used by the STA to send the sounding reference signal, or expected power when the sounding reference signal sent by the STA reaches the AP. Alternatively, the sounding reference signal further includes a third power indication field, where the third power indication field is used to indicate power used for sending the sounding reference signal. Alternatively, the sounding reference signal further includes a resource request field, where the resource request field is used to indicate a volume of data that needs to be transmitted by the STA for sending the sounding reference signal, that is, a data buffer/queue size (Buffer/Queue size), or a time requested by the STA for data transmission (TXOP Duration Requested).

It needs to be noted that the measurement notification message may further carry at least one of the following: (1) a frame type indication field, which indicates that the current measurement notification message is a TF-S; (2) a first power indication field, where the first power indication field is used to indicate power used by the AP to send the measurement notification message; (3) a second power indication field, where the second power indication field is used to indicate power used by the STA to send the sounding reference signal, or expected power when the sounding reference signal sent by the STA reaches the AP; (4) TXOP duration, where the TXOP duration is used to indicate a total time length of a sounding phase, timing of the TXOP duration starts when transmission of the TF-S ends, and the TXOP duration is used for transmission protection; or (5) a sounding reference signal type indication, which is used to indicate a specific type of an NDP sounding sent by the STA: a legacy NDP sounding type or an HEW NDP sounding type.

The measurement notification message carries only one of the first power indication field or the second power indication field.

It needs to be noted that the sounding reference signal type indication carried in the measurement notification message is intended to reduce transmission overheads in a UL channel measurement process. A legacy NDP sounding is shorter than an HEW NDP sounding, and requires much fewer transmission overheads. However, in a scenario in which delay spread is relatively high (for example, an outdoor scenario), an HEW NDP sounding needs to be used, so as to complete relatively accurate channel measurement. In addition to a difference between the lengths, a main difference between the legacy NDP sounding and the HEW NDP sounding is that a length of an LTF symbol (an LTF following an SIG field) of the legacy NDP sounding is less than that of an HE-LTF symbol of the HEW NDP sounding. That is, on same bandwidth, a quantity of subcarriers included in one HE-LTF symbol is greater than a quantity of subcarriers included in an LTF (the LTF following an SIG field) of the HEW NDP sounding. This is applicable to measurement in a high delay spread scenario. For example, a quantity of subcarriers included in each symbol in 802.11ax is four times a quantity of subcarriers included in each symbol in 802.11n. This requires measurement on more subcarriers. Therefore, the HE-LTF needs to include more subcarriers. When the AP determines that a scheduled STA has relatively low delay spread, the AP may instruct, by using the measurement notification message, the STA to send a legacy NDP sounding for channel measurement, so as to reduce transmission overheads. If the delay spread is relatively high, the AP instructs the STA to send an HEW NDP sounding. A structure of the HEW NDP sounding is shown in FIG. 3 (a). As shown in FIG. 3 (b), the legacy NDP sounding may be an HT NDP sounding (802.11n) or a VHT NDP sounding (802.11ac).

In addition, the sounding reference signal may further carry at least one of the following: (1) a signal type indication field, which is used to indicate that the current sounding reference signal is an NDP sounding; (2) a bandwidth indication field, where the bandwidth indication field is used to indicate bandwidth of an idle sub-channel used for sending the sounding reference signal; (3) a third power indication field, where the third power indication field is used to indicate power used for sending the sounding reference signal; or (4) a resource request field, where the resource request field is used to indicate a volume of data that needs to be transmitted by the STA for sending the sounding reference signal, that is, a data buffer/queue size (Buffer/Queue size), or a time requested by the STA for data transmission (TXOP Duration Requested).

FIG. 3 (a) shows a frame structure of a sounding reference signal according to an embodiment of the present invention. L-STF to HEW-SIG-A of the sounding are replicated and sent on each 20 MHz sub-channel of bandwidth indicated in a bandwidth indication field. HE-LTFs may also be replicated and sent on each 20 MHz sub-channel in the bandwidth indicated in the bandwidth indication field, or may be sent on the whole bandwidth indicated in the bandwidth indication field. A quantity of HE-LTFs included in the frame structure of the sounding reference signal sent by the STA is determined according to the HE-LTF quantity indication field in the measurement notification message received by the STA.

It needs to be noted that if the measurement notification message carries the first power indication field or the second power indication field, the sounding reference signal does not need to carry the third power indication field.

In specific implementation, after the STA receives the measurement notification message sent by the AP, the sending unit 202 sends the sounding reference signal in the following two manners.
(1) TDM: As shown in FIG. 4, STAs send a sounding reference signal (Sounding) at different times according to a measurement notification message (TF-S).
   Specifically, after receiving the TF-S, the STA determines, according to the STA queue (the STA queue is obtained by sorting, according to the sequence of the IDs that are of the STAs and that appear in the measurement notification message, the STAs that need to perform channel measurement), a sequence at which the STA sends the sounding. If IDs that are in the measurement notification message and that are of the STAs that need to perform channel measurement are implemented by using a STA ID list, a sending sequence is determined according to a sequence in the STA ID list. For example, if an ID of a STA sorts fifth in the STA ID list, the STA is a fifth STA that needs to send a sounding. If "identifiers of scheduled STAs" are implemented by using a group ID, a sequence of all STAs is specified when a group is created.
   It may be found according to the frame structure design of the sounding reference signal (sounding) shown in FIG. 3 (a) that except the quantity of the HE-LTFs, quantities of other fields in the sounding are fixed. Therefore, a frame length of each sounding may be determined with reference to an "LTF quantity indication field" in the TF-S, and then a time at which a STA needs to send a sounding may be determined. According to a current standard, scheduling information of different STAs that is in the TF-S may be separately obtained by performing CRC independently and/or encoding independently, and one STA needs to correctly receive only scheduling information of the STA. In this case, the STA may be incapable of obtaining, by parsing, scheduling information of all STAs that come before the STA, and therefore cannot calculate a time at which the STA sends a sounding. If a quantity of HE-LTFs is specified for each STA, a STA may be incapable of obtaining an HE-LTF of any preceding STA. However, when CRC is independently performed on scheduling information of each STA, if the TF-S includes only one LTF quantity indication field, the LTF quantity indication is located in a common part that precedes scheduling information of all STAs in the measurement notification message, and each STA may obtain, by parsing, a STA sequence without a need to obtain specific scheduling information of the STA. Therefore, in this scenario, a solution in which the TF-S includes only one LTF quantity indication field is better. Certainly, if CRC is jointly performed on scheduling information of different users, a solution in which different HE-LTF quantities are specified for different STAs is still feasible.
(2) CDM: As shown in FIG. 5, each STA sends a sounding simultaneously on an idle sub-channel determined by the STA from a channel indicated by the AP, and before the sending, each STA needs to multiply the sounding by one of CDM codes that are orthogonal to each other (this operation starts from an L-LTF of the sounding), so that the AP can distinguish between soundings of different STAs.

In this way, a time-domain length of each sounding is greater than that of a single sounding in the TDM. However, because inter-frame intervals in the TDM are reduced, transmission duration may be generally less than that required in the TDM solution. In the CDM solution, because all soundings are aligned in a time domain, the AP needs to specify only one HE-LTF in the TF-S.

It needs to be noted that a channel measurement mechanism provided in this embodiment of the present invention may further be combined with another mechanism, which specifically includes the following.

### (1) Combined with a DL channel measurement mechanism

As shown in FIG. 6, the channel measurement method in the present invention may be combined with a DL channel measurement mechanism in 802.11ac. An existing DL channel measurement mechanism, that is, an NDPA (Null Data Packet Announcement, null data packet announcement) broadcast by an AP includes a list of STAs that are required to feed back channel measurement results. The AP sends an NDP sounding to a STA (the STA is configured to measure a channel sounding reference signal in a downlink channel), so that the STA measures the downlink channel. Subsequently, the AP requires, by using a polling (Poll) mechanism, each STA to feed back a channel measurement result.

The channel measurement method provided in the present invention is combined with the DL channel measurement mechanism, so that uplink channel measurement may also be performed in addition to downlink channel measurement. This requires that the NDPA includes not only a measurement user set S1 of the DL channel whose channel measurement result needs to be fed back, but also a measurement user set S2 of a UL channel that needs to be used for sending a UL sounding. The S1 and the S2 may be completely the same, may have no intersection, or may have a partial intersection. This is equivalent to that an NDPA frame used for DL channel measurement and a TF-S used for UL channel measurement are combined into one frame NDPA & TF-S. If S1=S2, the NDPA & TF-S needs to include only one user list. Specifically, the AP sends an NDP sounding for DL channel measurement. Alternatively, the NDP sounding and the NDPA & TF-S may be combined into one frame. Subsequently, the STA sends a UL sounding (the UL sounding is the sounding reference signal in the present invention). The STA may first feed back a DL channel measurement result to the AP, and then send the UL sounding to the AP. Alternatively, the STA may first send the UL sounding to the AP, and then feed back a DL channel measurement result to the AP. If S1=S2, or the S1 and the S2 have a partial intersection, even a UL sounding measurement report and a DL channel measurement report of a same STA may be combined into one frame. That is, a MAC part is added to the UL sounding frame sent by the STA, so as to carry the DL channel measurement report.

### (2) Combined with an MU-RTS/CTS mechanism

Generally, the MU-RTS/CTS mechanism is used to protect subsequent DL transmission. A current MU-RTS/CTS mechanism has a problem that even the AP may determine, according to receiving of CTS frames, STAs that do not return a CTS frame (that is, STAs that fail to correctly receive an MU-RTS frame, or STAs that are in a dormant state), resource allocation cannot be adjusted in a time period between receiving of the CTS frame and subsequent sending of downlink data. This causes a waste of some resources. As shown in FIG. 7, according to the method provided in the present invention, the AP may determine, according to receiving of UL soundings, STAs that can correctly receive data from the AP. Therefore, resources may be reallocated in a whole MU-RTS/CTS execution period (that is, a transmission protection period in FIG. 7), so that the resources are used more effectively.

The STA provided in the present invention receives the measurement notification message sent by the AP, where the measurement notification message carries the identifier information of the channel that needs to be measured, and determines the M idle sub-channels from the at least one sub-channel included in the channel indicated in the identifier information of the channel that needs to be measured; and the STA sends the sounding reference signal by using the M idle sub-channels, so that the AP measures the M idle sub-channels according to the received sounding reference signal. Compared with the prior art in which the STA sends a sounding reference signal on a channel indicated by the AP, and the AP does not know channels that are occupied by a cell surrounding the STA, and consequently, the STA may send a sounding on an occupied channel, further causing interference to transmission being performed by an OBSS device, in the present invention, the STA selects, in a channel specified by the AP, an idle sub-channel for the STA to send a sounding, so that it can be ensured that the sub-channel on which channel measurement is performed is idle, thereby preventing, to some extent, transmission in an OBSS from being affected by UL channel measurement.

### Embodiment 3

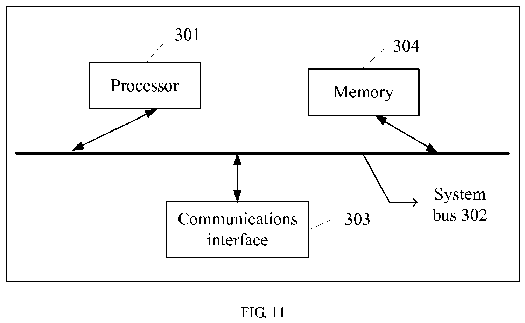

An embodiment of the present invention provides a STA. As shown in FIG. 11, the STA includes: a processor 301, a system bus 302, a communications interface 303, and a memory 304.

The processor 301 may be a central processing unit (English: central processing unit, CPU for short).

The memory 304 is configured to store program code, and transmit the program code to the processor 301. The processor 301 executes the following instructions according to the program code. The memory 304 may include a volatile memory (English: volatile memory), for example, a random access memory (English: random-access memory, RAM for short). Alternatively, the memory 304 may include a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short). Alternatively, the memory 304 may include a combination of the foregoing memories. The processor 301, the memory 304, and the communications interface 303 are connected and perform mutual communication by using the system bus 302.

The communications interface 303 may be implemented by an optical transceiver, an electrical transceiver, a radio transceiver, or any combination thereof. For example, the optical transceiver may be a small form-factor pluggable (English: small form-factor pluggable transceiver, SFP for short) transceiver (English: transceiver), an enhanced small form-factor pluggable (English: enhanced small form-factor pluggable, SFP+ for short) transceiver, or a 10 Gigabit small form-factor pluggable (English: 10 Gigabit small form-factor pluggable, XFP for short) transceiver. The electrical transceiver may be an Ethernet (English: Ethernet) network interface controller (English: network interface controller, NIC for short). The radio transceiver may be a wireless network interface controller (English: wireless network interface controller, WNIC for short). The STA may have multiple communications interfaces 303.

The processor 301 is configured to receive, by using the communications interface 303, a measurement notification message sent by an access point AP, where the measurement notification message carries identifier information of a channel that needs to be measured.

The measurement notification message may be a TF-S (Trigger Frame for Sounding), which is a trigger frame used for scheduling a measurement notification message. The measurement notification message is used to indicate, for the STA, channels that need to be measured.

In addition, the measurement notification message carries an ID of a STA that needs to perform channel measurement. The ID herein may be an AID or a PAID. Specifically, STAs to be scheduled may be represented by using a STA ID list, that is, IDs of the STAs to be scheduled are listed one by one; or may be represented by using a Group ID. However, when the IDs of the STAs are represented by using the Group ID, the AP is required to create a group in advance. Compared with use of the Group ID, use of the STA ID list provides higher flexibility.

The processor 301 is further configured to send a sounding reference signal by using the communications interface 303 and M idle sub-channels, so that the AP measures the M idle sub-channels according to the received sounding reference signal, where the M idle sub-channels are M idle sub-channels determined by the STA from a channel indicated in the identifier information of the channel that needs to be measured, and M is an integer greater than or equal to 1.

The sounding reference signal may be a sounding. The idle sub-channel is a sub-channel whose physical carrier sense (that is, CCA) result and virtual carrier sense (that is, NAV) result are both idle (idle). That the physical carrier sense result is idle means that the STA does not obtain, by means of sense on the sub-channel, a signal whose power exceeds a specific threshold. That the virtual carrier sense result is idle means that no other STAs reserve the sub-channel by means of RTS/CTS in advance.

Compared with an existing UL channel measurement mechanism in LTE, in the channel measurement method provided in the present invention, the STA selects, in a channel specified by the AP, an idle sub-channel for the STA to send a sounding, so as to prevent transmission being performed by an OBSS device from being affected.

For example, the AP instructs, by using the measurement notification message, a STA to measure an 80 MHz channel. However, a STA finds that only 40 MHz bandwidth is available, and a device in a neighboring cell is sending a signal (a CCA result is busy) on the other two 20 MHz bandwidth, or another STA reserves the other two 20 MHz bandwidth by exchanging an RTS frame, a CTS frame, or the like in advance (an NAV value is greater than 0). Therefore, the STA sends a sounding only on the available 40 MHz bandwidth. In addition, in subsequent scheduling of data transmission, the AP cannot schedule the STA on sub-channels on which the STA does not send a sounding.

It needs to be noted that the measurement notification message further carries an identifier ID of the STA that needs to perform channel measurement.

The processor 301 is configured to: perform clear channel assessment CCA on each sub-channel supported by both the AP and the STA, and determine a sub-channel whose CCA result is idle as an available sub-channel.

The processor 301 is specifically configured to determine M sub-channels that are of at least one sub-channel included in the channel indicated by the AP and that are the same as the available sub-channel as the M idle sub-channels.

The processor 301 is configured to perform, in first preset duration after the communications interface receives the measurement notification message, CCA on each sub-channel in the channel indicated in the identifier information.

The processor 301 is configured to determine M sub-channels whose CCA results are idle as the M idle sub-channels.

The processor 301 is further configured to: after the determining the M idle sub-channels, send a clear to send CTS frame by using the M idle sub-channels at a first moment, where the first moment is a moment obtained by adding up a moment at which the STA receives the measurement notification message and second preset duration.

It should be noted that the measurement notification message further carries a long training field LTF quantity indication field, and the LTF may be an HE-LTF.

The processor 301 is configured to determine, according to the HE-LTF quantity indication field carried in the measurement notification message, a STA queue, and a moment at which the STA receives the measurement notification message, a second moment at which the STA sends the sounding reference signal, where the STA queue is obtained by sorting, according to a sequence of IDs that are of the STAs and that appear in the measurement notification message, the STAs that need to perform channel measurement.

The processor 301 is further configured to: before the communications interface sends the sounding reference signal by using the M idle sub-channels, determine, according to the HE-LTF quantity indication field carried in the measurement notification message, the STA queue, and the moment at which the STA receives the measurement notification message, a last STA that sends a sounding reference signal, and a third moment at which sending of the sounding reference signal by the last STA that sends the sounding reference signal ends. The last STA that sends the sounding reference signal is a preceding STA that is in the STA queue and that is adjacent to the STA.

The processor 301 is configured to: perform CCA in a time interval between the third moment and the second moment, and determine M sub-channels whose CCA results are idle as the M idle sub-channels. The processor 301 is configured to: before CCA is performed, determine that an NAV of a sub-channel on which the CCA is to be performed is 0.

It should be noted that in implementation of the processor 301 in this embodiment, the M idle sub-channels may be all sub-channels that are in the channel indicated in the identifier information and whose CCA results are idle, or may be some sub-channels of all the sub-channels that are in the channel indicated in the identifier information and whose CCA results are idle. The former case is applicable to a scenario in which discontinuous channel transmission is allowed. For example, the channel indicated in the identifier information includes four sub-channels (sub-channels 1, 2, 3, and 4), and a result of CCA performed by the STA is that three sub-channels (the sub-channels 1, 3, and 4) are idle, and in this case, the STA sends a sounding on the sub-channels 1, 3, and 4. For the latter case, a specific method is: The STA sends a sounding on continuous channels that include a primary channel. For example, the channel indicated in the identifier information includes four sub-channels (sub-channels 1, 2, 3, and 4), a result of CCA performed by the STA is that three sub-channels (the sub-channels 1, 3, and 4) are idle, and it is assumed that a primary channel (Primary Channel) in a current BSS is the sub-channel 3, and in this case, the STA may send a sounding only on the sub-channel 3 and the sub-channel 4. An advantage of this is that channels used by the STA to send the sounding are always continuous, thereby simplifying receiving processing on an AP side. Optionally, it may further be restricted that the STA may send a sounding only on continuous 20/40/80/160 MHz channels that include a primary channel. For example, the channel indicated in the identifier information includes four sub-channels (sub-channels 1, 2, 3, and 4), a result of CCA performed by the STA is that three sub-channels (the sub-channels 1, 2 and 3) are idle, and it is assumed that a primary channel (Primary Channel) in a current BSS is the sub-channel 1, and in this case, the STA sends a sounding only on the sub-channel 1 and the sub-channel 2, but does not send the sounding on the sub-channel 3. An advantage of this is that current physical signal sequence designs for the 20/40/80/160 MHz channels may be reused, without a need to redesign physical signal sequences corresponding to bandwidth such as 60/100/120/140 MHz. The physical signal sequence is frequency-domain sequences of a short training field (Short Training Field, STF) and a long training field (Long Training Field, LTF) in a physical header, for example, frequency-domain sequences of an HE-STF and an HE-LTF shown in FIG. 3 (a).

Particularly, in the implementation of the processor 301 in this embodiment, the M idle sub-channels may be all sub-channels of sub-channels that are in the channel indicated in the identifier information and that are the same as the available sub-channel, or may be some sub-channels of all the sub-channels that are in the channel indicated in the identifier information and that are the same as the available sub-channel. For example, sub-channels supported by both the AP and the STA are sub-channels 1 to 8, available sub-channels include sub-channels 1, 2, 3, 5, 7, and 8, and the channel indicated in the identifier information includes sub-channels 1 to 4, and in this case, all sub-channels of sub-channels that are in the channel indicated in the identifier information and that are the same as the available sub-channels are the sub-channels 1 to 3. It is assumed that the primary channel is the sub-channel 1, and bandwidth of each sub-channel is 20 MHz. Similar to Method 2 and Method 3, the some sub-channels of all the sub-channels that are in the channel indicated in the identifier information and that are the same as the available sub-channels may be continuous channels that are of all the sub-channels and that include the primary channel, that is, the sub-channels 1 to 3; or optionally, may be continuous 20/40/80/160 MHz channels that are of all the sub-channels and that include the primary channel, that is, the sub-channels 1 and 2.

It needs to be noted that the measurement notification message indicates that N STAs need to perform channel measurement, and N is an integer greater than or equal to 1. The measurement notification message carries one HE-LTF quantity indication field, which is used to indicate a quantity of HE-LTF fields included in the sounding reference signal sent by the STA that needs to perform channel measurement.

Alternatively, the measurement notification message carries N HE-LTF quantity indication fields, where the N HE-LTF quantity indication fields are in a one-to-one correspondence with the N STAs that need to perform channel measurement, and are used to indicate quantities of HE-LTF fields included in sounding reference signal frames sent by the STAs corresponding to the HE-LTF quantity indication fields.

If the measurement notification message carries one HE-LTF quantity indication field, the sounding reference signal sent by the STA includes X HE-LTFs, where X is a quantity indicated in the HE-LTF quantity indication field.

If the measurement notification message carries N HE-LTF quantity indication fields, the sounding reference signals sent by the STAs include Y HE-LTFs, where Y is a quantity indicated in the HE-LTF quantity indication fields corresponding to the STAs.

In addition, the sounding reference signal further includes a bandwidth indication field, where the bandwidth indication field is used to indicate bandwidth of an idle sub-channel that is used to send the sounding reference signal.

The measurement notification message further includes a first power indication field, where the first power indication field is used to indicate power used by the AP to send the measurement notification message. Alternatively, the measurement notification message further includes a second power indication field, where the second power indication field is used to indicate power used by the STA to send the sounding reference signal, or expected power when the sounding reference signal sent by the STA reaches the AP. Alternatively, the sounding reference signal further includes a third power indication field, where the third power indication field is used to indicate power used for sending the sounding reference signal. Alternatively, the sounding reference signal further includes a resource request field, where the resource request field is used to indicate a volume of data that needs to be transmitted by the STA for sending the sounding reference signal, that is, a data buffer/queue size (Buffer/Queue size), or a time requested by the STA for data transmission (TXOP Duration Requested).

It needs to be noted that the measurement notification message may further carry at least one of the following: (1) a frame type indication field, which indicates that the current measurement notification message is a TF-S; (2) a first power indication field, where the first power indication field is used to indicate power used by the AP to send the measurement notification message; (3) a second power indication field, where the second power indication field is used to indicate power used by the STA to send the sounding reference signal, or expected power when the sounding reference signal sent by the STA reaches the AP; (4) TXOP duration, where the TXOP duration is used to indicate a total time length of a sounding phase, timing of the TXOP duration starts when transmission of the TF-S ends, and the TXOP duration is used for transmission protection; or (5) a sounding reference signal type indication, which is used to indicate a specific type of an NDP sounding sent by the STA: a legacy NDP sounding type or an HEW NDP sounding type.

The measurement notification message carries only one of the first power indication field or the second power indication field.

It needs to be noted that the sounding reference signal type indication carried in the measurement notification message is intended to reduce transmission overheads in a UL channel measurement process. A legacy NDP sounding is shorter than an HEW NDP sounding, and requires much fewer transmission overheads. However, in a scenario in which delay spread is relatively high (for example, an outdoor scenario), an HEW NDP sounding needs to be used, so as to complete relatively accurate channel measurement. In addition to a difference between the lengths, a main difference between the legacy NDP sounding and the HEW NDP sounding is that a length of an LTF symbol (an LTF following an SIG field) of the legacy NDP sounding is less than that of an HE-LTF symbol of the HEW NDP sounding. That is, on same bandwidth, a quantity of subcarriers included in one HE-LTF symbol is greater than a quantity of subcarriers included in an LTF (the LTF following an SIG field) of the HEW NDP sounding. This is applicable to measurement in a high delay spread scenario. For example, a quantity of subcarriers included in each symbol in 802.11ax is four times a quantity of subcarriers included in each symbol in 802.11n. This requires measurement on more subcarriers. Therefore, the HE-LTF needs to include more subcarriers. When the AP determines that a scheduled STA has relatively low delay spread, the AP may instruct, by using the measurement notification message, the STA to send a legacy NDP sounding for channel measurement, so as to reduce transmission overheads. If the delay spread is relatively high, the AP instructs the STA to send an HEW NDP sounding. A structure of the HEW NDP sounding is shown in FIG. 3 (a). As shown in FIG. 3 (b), the legacy NDP sounding may be an HT NDP sounding (802.11n) or a VHT NDP sounding (802.11ac).

In addition, the sounding reference signal may further carry at least one of the following: (1) a signal type indication field, which is used to indicate that the current sounding reference signal is an NDP sounding; (2) a bandwidth indication field, where the bandwidth indication field is used to indicate bandwidth of an idle sub-channel used for sending the sounding reference signal; (3) a third power indication field, where the third power indication field is used to indicate power used for sending the sounding reference signal; or (4) a resource request field, where the resource request field is used to indicate a volume of data that needs to be transmitted by the STA for sending the sounding reference signal, that is, a data buffer/queue size (Buffer/Queue size), or a time requested by the STA for data transmission (TXOP Duration Requested).

FIG. 3 (a) shows a frame structure of a sounding reference signal according to an embodiment of the present invention. L-STF to HEW-SIG-A of the sounding are replicated and sent on each 20 MHz sub-channel of bandwidth indicated in a bandwidth indication field. HE-LTFs may also be replicated and sent on each 20 MHz sub-channel in the bandwidth indicated in the bandwidth indication field, or may be sent on the whole bandwidth indicated in the bandwidth indication field. A quantity of HE-LTFs included in the frame structure of the sounding reference signal sent by the STA is determined according to the HE-LTF quantity indication field in the measurement notification message received by the STA.

It needs to be noted that if the measurement notification message carries the first power indication field or the second power indication field, the sounding reference signal does not need to carry the third power indication field.

In specific implementation, after the STA receives the measurement notification message sent by the AP, the processor 301 sends the sounding reference signal in the following two manners.
(1) TDM: As shown in FIG. 4, STAs send a sounding reference signal (Sounding) at different times according to a measurement notification message (TF-S).
   Specifically, after receiving the TF-S, the STA determines, according to the STA queue (the STA queue is obtained by sorting, according to the sequence of the IDs that are of the STAs and that appear in the measurement notification message, the STAs that need to perform channel measurement), a sequence at which the STA sends the sounding. If IDs that are in the measurement notification message and that are of the STAs that need to perform channel measurement are implemented by using a STA ID list, a sending sequence is determined according to a sequence in the STA ID list. For example, if an ID of a STA sorts fifth in the STA ID list, the STA is a fifth STA that needs to send a sounding. If "identifiers of scheduled STAs" are implemented by using a group ID, a sequence of all STAs is specified when a group is created.
   It may be found according to the frame structure design of the sounding reference signal (sounding) shown in FIG. 3 (a) that except the quantity of the HE-LTFs, quantities of other fields in the sounding are fixed. Therefore, a frame length of each sounding may be determined with reference to an "LTF quantity indication field" in the TF-S, and then a time at which a STA needs to send a sounding may be determined. According to a current standard, scheduling information of different STAs that is in the TF-S may be separately obtained by independently performing CRC and/or encoding, and one STA needs to correctly receive only scheduling information of the STA. In this case, the STA may be incapable of obtaining, by parsing, scheduling information of all STAs that come before the STA, and therefore cannot calculate a time at which the STA sends a sounding.
   If a quantity of HE-LTFs is specified for each STA, a STA may be incapable of obtaining an HE-LTF of any preceding STA. However, when CRC is independently performed on scheduling information of each STA, if the TF-S includes only one LTF quantity indication field, the LTF quantity indication is located in a common part that precedes scheduling information of all STAs in the measurement notification message, and each STA may obtain, by parsing, a STA sequence without a need to obtain specific scheduling information of the STA. Therefore, in this scenario, a solution in which the TF-S includes only one LTF quantity indication field is better. Certainly, if CRC is jointly performed on scheduling information of different users, a solution in which different HE-LTF quantities are specified for different STAs is still feasible.
(2) CDM: As shown in FIG. 5, each STA sends a sounding simultaneously on an idle sub-channel determined by the STA from a channel indicated by the AP, and before the sending, each STA needs to multiply the sounding by one of CDM codes that are orthogonal to each other (this operation starts from an L-LTF of the sounding), so that the AP can distinguish between soundings of different STAs.

In this way, a time-domain length of each sounding is greater than that of a single sounding in the TDM. However, because inter-frame intervals in the TDM are reduced, transmission duration may be generally less than that required in the TDM solution. In the CDM solution, because all soundings are aligned in a time domain, the AP needs to specify only one HE-LTF in the TF-S.

It needs to be noted that a channel measurement mechanism provided in this embodiment of the present invention may further be combined with another mechanism, which specifically includes the following.

### (1) Combined with a DL channel measurement mechanism

As shown in FIG. 6, the channel measurement method in the present invention may be combined with a DL channel measurement mechanism in 802.11ac. An existing DL channel measurement mechanism, that is, an NDPA (Null Data Packet Announcement, null data packet announcement) broadcast by an AP includes a list of STAs that are required to feed back channel measurement results. The AP sends an NDP sounding to a STA (the STA is configured to measure a channel sounding reference signal in a downlink channel), so that the STA measures the downlink channel. Subsequently, the AP requires, by using a polling (Poll) mechanism, each STA to feed back a channel measurement result.

The channel measurement method provided in the present invention is combined with the DL channel measurement mechanism, so that uplink channel measurement may also be performed in addition to downlink channel measurement. This requires that the NDPA includes not only a measurement user set S 1 of the DL channel whose channel measurement result needs to be fed back, but also a measurement user set S2 of a UL channel that needs to be used for sending a UL sounding. The S1 and the S2 may be completely the same, may have no intersection, or may have a partial intersection. This is equivalent to that an NDPA frame used for DL channel measurement and a TF-S used for UL channel measurement are combined into one frame NDPA & TF-S. If S1=S2, the NDPA & TF-S needs to include only one user list. Specifically, the AP sends an NDP sounding for DL channel measurement. Alternatively, the NDP sounding and the NDPA & TF-S may be combined into one frame. Subsequently, the STA sends a UL sounding (the UL sounding is the sounding reference signal in the present invention). The STA may first feed back a DL channel measurement result to the AP, and then send the UL sounding to the AP. Alternatively, the STA may first send the UL sounding to the AP, and then feed back a DL channel measurement result to the AP. If S1=S2, or the S1 and the S2 have a partial intersection, even a UL sounding measurement report and a DL channel measurement report of a same STA may be combined into one frame. That is, a MAC part is added to the UL sounding frame sent by the STA, so as to carry the DL channel measurement report.

### (2) Combined with an MU-RTS/CTS mechanism

Generally, the MU-RTS/CTS mechanism is used to protect subsequent DL transmission. A current MU-RTS/CTS mechanism has a problem that even the AP may determine, according to receiving of CTS frames, STAs that do not return a CTS frame (that is, STAs that fail to correctly receive an MU-RTS frame, or STAs that are in a dormant state), resource allocation cannot be adjusted in a time period between receiving of the CTS frame and subsequent sending of downlink data. This causes a waste of some resources. As shown in FIG. 7, according to the method provided in the present invention, the AP may determine, according to receiving of UL soundings, STAs that can correctly receive data from the AP. Therefore, resources may be reallocated in a whole MU-RTS/CTS execution period (that is, a transmission protection period in FIG. 7), so that the resources are used more effectively.

The STA provided in the present invention receives the measurement notification message sent by the AP, where the measurement notification message carries the identifier information of the channel that needs to be measured, and determines the M idle sub-channels from the at least one sub-channel included in the channel indicated in the identifier information of the channel that needs to be measured; and the STA sends the sounding reference signal by using the M idle sub-channels, so that the AP measures the M idle sub-channels according to the received sounding reference signal. Compared with the prior art in which the STA sends a sounding reference signal on a channel indicated by the AP, and the AP does not know channels that are occupied by a cell surrounding the STA, and consequently, the STA may send a sounding on an occupied channel, further causing interference to transmission being performed by an OBSS device, in the present invention, the STA selects, in a channel specified by the AP, an idle sub-channel for the STA to send a sounding, so that it can be ensured that the sub-channel on which channel measurement is performed is idle, thereby preventing, to some extent, transmission in an OBSS from being affected by UL channel measurement.

The foregoing descriptions about implementations allow a person skilled in the art to understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or part of the functions described above. For a detailed working process of the foregoing apparatus, reference may be made to a corresponding process in the foregoing method embodiments, and details are not described herein again.

The units described as separate parts may or may not be physically separate, and parts displayed as units may be one or more physical units, may be located in one place, or may be distributed on different places. Some or all of the units may be selected according to actual requirements to achieve the objectives of the solutions of the embodiments. In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An uplink channel measurement method for a wireless local area network, comprising:
receiving (101), by a station, STA, a measurement notification message sent by an access point, AP, wherein the measurement notification message carries identifier information of a channel that needs to be measured;
sending (102), by the STA, a sounding reference signal by using M idle sub-channels to the AP, so that the AP is able to measure the M idle sub-channels according to the received sounding reference signal, wherein the M idle sub-channels are M idle sub-channels determined by the STA from a channel indicated in the identifier information of the channel that needs to be measured, and M is an integer greater than or equal to 1,
wherein the measurement notification message further carries a long training field, LTF, quantity indication field, and the method further comprises:
determining, by the STA according to the LTF quantity indication field carried in the measurement notification message, a STA queue, and a moment at which the STA receives the measurement notification message, a second moment at which the STA sends the sounding reference signal, wherein the STA queue is obtained by sorting, according to a sequence of IDs that are of the STAs and that appear in the measurement notification message, the STAs that need to perform channel measurement,
wherein the measurement notification message further carries a STA ID list comprising IDs of STAs to be scheduled to perform uplink channel measurement, wherein the STA is comprised in said STA ID list.

2. The method according to claim 1, wherein before the receiving, by the STA, the measurement notification message sent by the AP, the method further comprises:
performing, by the STA, clear channel assessment, CCA, on each sub-channel supported by both the AP and the STA, and determining a sub-channel whose CCA result is idle as an available sub-channel; and
the determining, by the STA, the M idle sub-channels from at least one sub-channel comprised in a channel indicated in the identifier information of the channel that needs to be measured specifically comprises:
determining M sub-channels that are in the channel indicated in the identifier information and that are the same as the available sub-channel as the M idle sub-channels.

3. The method according to claim 1, wherein before the sending, by the STA, the sounding reference signal by using M idle sub-channels, the method further comprises:
performing, by the STA in first preset duration after receiving the measurement notification message, CCA on each sub-channel in the channel indicated in the identifier information, and determining M sub-channels whose CCA results are idle as the M idle sub-channels.

4. The method according to claim 1, wherein before the sending, by the STA, the sounding reference signal by using M idle sub-channels, the method further comprises:
determining, by the STA according to the LTF quantity indication field carried in the measurement notification message, the STA queue, and the moment at which the STA receives the measurement notification message, a last STA that sends a sounding reference signal, and a third moment at which sending of the sounding reference signal by the last STA that sends the sounding reference signal ends, wherein the last STA that sends the sounding reference signal is a preceding STA that is in the STA queue and that is adjacent to the STA; and
performing, by the STA, CCA in a time interval between the third moment and the second moment, and determining M sub-channels whose CCA results are idle as the M idle sub-channels.

5. The method according to any one of claim 2, 3 or 4, wherein a network allocation vector, NAV, of a sub-channel on which the CCA is to be performed is 0.

6. The method according to any one of claims 1 to 5, wherein the measurement notification message indicates that N STAs need to perform channel measurement, and N is an integer greater than or equal to 1; and
the measurement notification message carries one LTF quantity indication field, which is used to indicate a quantity of LTF fields comprised in the sounding reference signal sent by the STA that needs to perform channel measurement; or
the measurement notification message carries N LTF quantity indication fields, wherein the N LTF quantity indication fields are separately used to indicate quantities of LTF fields comprised in sounding reference signal frames sent by the STAs corresponding to the LTF quantity indication fields.

7. The method according to claim 6, wherein if the measurement notification message carries one LTF quantity indication field, the sounding reference signal sent by the STA comprises X LTFs, wherein X is a quantity indicated in the LTF quantity indication field.

8. The method according to claim 6, wherein if the measurement notification message carries N LTF quantity indication fields, the sounding reference signals sent by the STAs comprise Y LTFs, wherein Y is a quantity indicated in the LTF quantity indication fields corresponding to the STAs.

9. The method according to any one of claims 1 to 8, wherein the method further comprises:
the sounding reference signal further comprises a resource request field, wherein the resource request field is used to indicate a volume of data that needs to be transmitted by the STA that sends the sounding reference signal, or a time requested by the STA for data transmission.

10. The method according to any one of claims 1 to 9, wherein the measurement notification message further comprises a sounding reference signal type indication, the sounding reference signal type indication is used to indicate a type of the sounding reference signal, and the type comprises legacy NDP sounding and HEW NDP sounding.

11. The method according to any one of claims 1 to 8, wherein the measurement notification message further includes a second power indication field, where the second power indication field is used to indicate power used by the STA to send the sounding reference signal, or expected power when the sounding reference signal sent by the STA reaches the AP.

12. A station, STA, comprising:
a receiving unit (201), configured to receive a measurement notification message sent by an access point, AP, wherein the measurement notification message carries identifier information of a channel that needs to be measured;
a sending unit (202), configured to send a sounding reference signal by using M idle sub-channels to the AP, so that the AP is able to measure the M idle sub-channels according to the received sounding reference signal, wherein the M idle sub-channels are M idle sub-channels determined by the STA from a channel indicated in the identifier information of the channel that needs to be measured, and M is an integer greater than or equal to 1,
wherein the measurement notification message further carries a long training field, LTF, quantity indication field, and the STA is further configured to
determine, according to the LTF quantity indication field carried in the measurement notification message, a STA queue, and a moment at which the STA receives the measurement notification message, a second moment at which the STA sends the sounding reference signal, wherein the STA queue is obtained by sorting, according to a sequence of IDs that are of the STAs and that appear in the measurement notification message, the STAs that need to perform channel measurement, wherein the measurement notification message further carries a STA ID list comprising IDs of STAs to be scheduled to perform uplink channel measurement, wherein the STA is comprised in said STA ID list

13. The STA according to claim 12, wherein the STA further includes a first clear channel assessment, CCA, unit (203), configured to: perform clear channel assessment CCA on each sub-channel supported by both the AP and the STA, and determine a sub-channel whose CCA result is idle as an available sub-channel; and
the STA further includes a first determining unit (204), where the first determining unit is specifically configured to determine M sub-channels that are in the channel indicated in the identifier information and that are the same as the available sub-channel as the M idle sub-channels.

## Patentansprüche

1. Uplink-Kanal-Messverfahren für ein drahtloses lokales Netzwerk, Folgendes umfassend:
Empfangen (101), durch eine Station (STA), einer Messungsbenachrichtigungsnachricht, die von einem Zugangspunkt (*access point-*AP) gesendet wird, wobei die Messungsbenachrichtigungsnachricht Identifizierungsinformationen eines Kanals trägt, der gemessen werden muss;
Senden (102), durch die STA, eines klingenden Referenzsignals durch das Verwenden von M freien Unterkanälen an den AP, sodass der AP die M freien Unterkanäle gemäß dem empfangenen klingenden Referenzsignal messen kann, wobei die M freien Unterkanäle M freie Unterkanäle sind, die durch die STA aus einem Kanal bestimmt werden, der in den Identifizierungsinformationen des Kanals angezeigt ist, der gemessen werden muss, und M eine ganze Zahl von größer oder gleich 1 ist, wobei die Messungsbenachrichtigungsnachricht ferner ein langes Trainingsfeld(LTF)mengenanzeigefeld trägt und das Verfahren ferner Folgendes umfasst:
Bestimmen, durch die STA gemäß dem in der Messungsbenachrichtigungsnachricht getragenen LTF-Mengenanzeigefeld, einer STA-Warteschlange und eines Zeitpunkts, zu dem die STA die Messungsbenachrichtigungsnachricht empfängt, eines zweiten Zeitpunkts, zu dem die STA das klingende Referenzsignal sendet, wobei die STA-Warteschlange erhalten wird, indem gemäß einer Sequenz von IDs, die von den STAs stammen und die in der Messungsbenachrichtigungsnachricht erscheinen, die STAs sortiert werden, die eine Kanalmessung durchführen müssen, wobei die Messungsbenachrichtigungsnachricht ferner eine STA-ID-Liste trägt, die IDs von STAs umfasst, die geplant werden sollen, um eine Uplink-Kanal-Messung durchzuführen, wobei die STA in der STA-ID-Liste enthalten ist.

2. Verfahren nach Anspruch 1, wobei vor dem Empfangen durch die STA der durch den AP gesendeten Messungsbenachrichtigungsnachricht das Verfahren ferner Folgendes umfasst:
Durchführen durch die STA von Klarkanalermittlung (*clear Channel assessment-*CCA) für jeden von sowohl dem AP als auch der STA unterstützten Unterkanal und Bestimmen eines Unterkanals, dessen CCA-Ergebnis als ein verfügbarer Unterkanal frei ist; und
das Bestimmen, durch die STA, der M freien Unterkanäle aus wenigstens einem Unterkanal, der in einem Kanal enthalten ist, der in den Identifizierungsinformationen des Kanals, der gemessen werden muss, angezeigt ist, insbesondere Folgendes umfasst:
Bestimmen von M Unterkanälen, die sich in dem Kanal befinden, der in den Identifizierungsinformationen angezeigt ist, und die mit dem verfügbaren Unterkanal als die M freien Unterkanäle identisch sind.

3. Verfahren nach Anspruch 1, wobei vor dem Senden, durch die STA, des klingenden Referenzsignals durch das Verwenden von M freien Unterkanälen, das Verfahren ferner Folgendes umfasst:
Durchführen, durch die STA in einer ersten voreingestellten Dauer nach dem Empfangen der Messungsbenachrichtigungsnachricht, von CCA auf jedem Unterkanal in dem in den Identifizierungsinformationen angezeigten Kanal und Bestimmen von M Unterkanälen, deren CCA-Ergebnisse als die M freien Unterkanäle frei sind.

4. Verfahren nach Anspruch 1, wobei vor dem Senden, durch die STA, des klingenden Referenzsignals durch das Verwenden von M freien Unterkanälen, das Verfahren ferner Folgendes umfasst:
Bestimmen, durch die STA gemäß dem LTF-Mengenanzeigefeld, das in der Messungsbenachrichtigungsnachricht getragen wird, der STA-Warteschlange und des Moments, zu dem die STA die Messungsbenachrichtigungsnachricht empfängt, einer letzten STA, die ein klingendes Referenzsignal sendet, und eines dritten Moments, zu dem das Senden des klingenden Referenzsignals durch die letzte STA, die das klingende Referenzsignal sendet, endet, wobei die letzte STA, die das klingende Referenzsignal sendet, eine vorhergehende STA ist, die in der STA-Warteschlange ist und die neben der STA ist; und
Durchführen, durch die STA, von CCA in einem Zeitintervall zwischen dem dritten Moment und dem zweiten Moment und Bestimmen von M Unterkanälen, deren CCA-Ergebnisse als die M freien Unterkanäle frei sind.

5. Verfahren nach einem der Ansprüche 2, 3 oder 4, wobei ein Netzwerkzuweisungsvektor (*network allocation vector-* NAV) eines Unterkanals, auf dem die CCA durchgeführt werden soll, 0 ist.

6. Verfahren nach einem der Ansprüche 1 bis 5, wobei die Messungsbenachrichtigungsnachricht anzeigt, dass N STAs Kanalmessung durchführen müssen, und N eine ganze Zahl von größer oder gleich 1 ist; und
die Messungsbenachrichtigungsnachricht ein LTF-Mengenanzeigefeld trägt, das verwendet wird, um eine Menge von LTF-Feldern anzuzeigen, die in dem durch die STA gesendeten klingenden Referenzsignal enthalten sind, das eine Kanalmessung durchführen muss; oder
die Messungsbenachrichtigungsnachricht N LTF-Mengenanzeigefelder trägt, wobei die N LTF-Mengenanzeigefelder separat verwendet werden, um Mengen von LTF-Feldern anzuzeigen, die in durch die STAs gesendeten klingenden Referenzsignalrahmen enthalten sind, die den LTF-Mengenanzeigefeldern entsprechen.

7. Verfahren nach Anspruch 6, wobei, wenn die Messungsbenachrichtigungsnachricht ein LTF-Mengenanzeigefeld trägt, das durch die STA gesendete klingende Referenzsignal X LTFs umfasst, wobei X eine Menge ist, die in dem LTF-Mengenanzeigefeld angezeigt wird.

8. Verfahren nach Anspruch 6, wobei, wenn die Messungsbenachrichtigungsnachricht N LTF-Mengenanzeigefelder trägt, die durch die STAs gesendeten klingenden Referenzsignale Y LTFs umfassen, wobei Y eine Menge ist, die in den LTF-Mengenanzeigefeldern angezeigt ist, die den STAs entsprechen.

9. Verfahren nach einem der Ansprüche 1 bis 8, wobei das Verfahren ferner Folgendes umfasst:
das klingende Referenzsignal umfasst ferner ein Ressourcenanforderungsfeld, wobei das Ressourcenanforderungsfeld verwendet wird, um ein Datenvolumen, das durch die STA, die das klingende Referenzsignal sendet, übertragen werden muss, oder eine durch die STA für die Datenübertragung angeforderte Zeit anzuzeigen.

10. Verfahren nach einem der Ansprüche 1 bis 9, wobei die Messungsbenachrichtigungsnachricht ferner eine klingende Referenzsignalartanzeige umfasst, wobei die klingende Referenzsignalartanzeige verwendet wird, um eine Art des klingenden Referenzsignals anzuzeigen und die Art Legacy-NDP-Klang und HEW-NDP-Klang umfasst.

11. Verfahren nach einem der Ansprüche 1 bis 8, wobei die Messungsbenachrichtigungsnachricht ferner ein zweites Leistungsanzeigefeld beinhaltet, wobei das zweite Leistungsanzeigefeld verwendet wird, um eine Leistung, die durch die STA zum Senden des klingenden Referenzsignals verwendet wird, oder eine erwartete Leistung anzuzeigen, wenn das durch die STA gesendete klingende Referenzsignal den AP erreicht.

12. Station (STA), Folgendes umfassend:
eine Empfangseinheit (201), die zum Empfangen einer Messungsbenachrichtigungsnachricht, die von einem Zugangspunkt (AP) gesendet wird, konfiguriert ist, wobei die Messungsbenachrichtigungsnachricht Identifizierungsinformationen eines Kanals trägt, der gemessen werden muss;
eine Sendeeinheit (202), die zum Senden eines klingenden Referenzsignals durch das Verwenden von M freien Unterkanälen an den AP konfiguriert ist, sodass der AP die M freien Unterkanäle gemäß dem empfangenen klingenden Referenzsignal messen kann, wobei die M freien Unterkanäle M freie Unterkanäle sind, die durch die STA aus einem Kanal bestimmt werden, der in den Identifizierungsinformationen des Kanals angezeigt ist, der gemessen werden muss, und M eine ganze Zahl von größer oder gleich 1 ist, wobei die Messungsbenachrichtigungsnachricht ferner ein langes Trainingsfeld(LTF)mengenanzeigefeld trägt und die STA ferner zu Folgendem konfiguriert ist: Bestimmen, gemäß dem in der Messungsbenachrichtigungsnachricht getragenen LTF-Mengenanzeigefeld, einer STA-Warteschlange und eines Zeitpunkts, zu dem die STA die Messungsbenachrichtigungsnachricht empfängt, eines zweiten Zeitpunkts, zu dem die STA das klingende Referenzsignal sendet, wobei die STA-Warteschlange erhalten wird, indem gemäß einer Sequenz von IDs, die von den STAs stammen und die in der Messungsbenachrichtigungsnachricht erscheinen, die STAs sortiert werden, die eine Kanalmessung durchführen müssen, wobei die Messungsbenachrichtigungsnachricht ferner eine STA-ID-Liste trägt, die IDs von STAs umfasst, die geplant werden sollen, um eine Uplink-Kanal-Messung durchzuführen, wobei die STA in der STA-ID-Liste enthalten ist.

13. STA nach Anspruch 12, wobei die STA ferner eine erste Klarkanalermittlungs(CCA)einheit (203) beinhaltet, die zu Folgendem konfiguriert ist:
Durchführen einer Klarkanalermittlung (CCA) für jeden von sowohl dem AP als auch der STA unterstützten Unterkanal und Bestimmen eines Unterkanals, dessen CCA-Ergebnis als ein verfügbarer Unterkanal frei ist; und
die STA ferner eine erste Bestimmungseinheit (204) beinhaltet, wobei die erste Bestimmungseinheit zum Bestimmen von M Unterkanälen speziell konfiguriert ist, die sich in dem Kanal befinden, der in den Identifizierungsinformationen angezeigt ist, und die mit dem verfügbaren Unterkanal als die M freien Unterkanäle identisch sind.

## Revendications

1. Procédé de mesure de canal de liaison montante pour un réseau local sans fil, comprenant :
la réception (101), par une station, STA, d'un message de notification de mesure envoyé par un point d'accès, AP, dans lequel le message de notification de mesure porte des informations d'identificateur d'un canal devant être mesurées ;
l'envoi (102), par la STA, d'un signal de référence de sondage à l'aide de M sous-canaux inactifs à l'AP, de telle sorte que l'AP puisse mesurer les M sous-canaux inactifs selon le signal de référence de sondage reçu, dans lequel les M sous-canaux inactifs sont des M sous-canaux inactifs déterminés par la STA à partir d'un canal indiqué dans les informations d'identificateur du canal devant être mesuré, et M est un entier supérieur ou égal à 1, dans lequel le message de notification de mesure porte en outre un champ d'apprentissage long, LTF, un champ d'indication de quantité, et le procédé comprend en outre :
la détermination, par la STA selon le champ d'indication de quantité LTF porté dans le message de notification de mesure, d'une file d'attente de la STA et d'un moment auquel la STA reçoit le message de notification de mesure, et d'un deuxième moment auquel la STA envoie le signal de référence de sondage, dans lequel la file d'attente de la STA est obtenue par tri, selon une séquence d'ID appartenant aux STA et apparaissant dans le message de notification de mesure, les STA devant exécuter une mesure de canal, dans lequel le message de notification de mesure porte en outre une liste d'ID de STA comprenant des ID de STA à ordonnancer pour exécuter une mesure de canal de liaison montante, dans lequel la STA est comprise dans ladite liste d'ID de STA.

2. Procédé selon la revendication 1, dans lequel, avant la réception, par la STA, du message de notification de mesure envoyé par l'AP, le procédé comprend en outre :
l'exécution, par la STA, d'une évaluation de canal libre, CCA, sur chaque sous-canal pris en charge à la fois par l'AP et par la STA, et la détermination d'un sous-canal dont le résultat de CCA est inactif en tant que sous-canal disponible ; et
la détermination, par la STA, des M sous-canaux inactifs à partir d'au moins un sous-canal compris dans un canal indiqué dans les informations d'identificateur du canal devant être mesuré, comprend spécifiquement :
la détermination des M sous-canaux qui sont dans le canal indiqué dans les informations d'identificateur et qui sont identiques au sous-canal disponible en tant que M sous-canaux inactifs.

3. Procédé selon la revendication 1, dans lequel, avant l'envoi, par la STA, du signal de référence de sondage à l'aide de M sous-canaux inactifs, le procédé comprend en outre :
l'exécution, par la STA, dans la première durée prédéfinie après réception du message de notification de mesure, d'une CCA sur chaque sous-canal dans le canal indiqué dans les informations d'identificateur, et la détermination de M sous-canaux dont les résultats de CCA sont inactifs en tant que M sous-canaux inactifs.

4. Procédé selon la revendication 1, dans lequel, avant l'envoi, par la STA, du signal de référence de sondage à l'aide de M sous-canaux inactifs, le procédé comprend en outre :
la détermination, par la STA selon le champ d'indication de quantité LTF porté dans le message de notification de mesure, de la file d'attente de la STA, et du moment auquel la STA reçoit le message de notification de mesure, d'une dernière STA qui envoie un signal de référence de sondage et d'un troisième moment auquel se termine l'envoi du signal de référence de sondage par la dernière STA qui envoie le signal de référence de sondage, dans lequel la dernière STA qui envoie le signal de référence de sondage est une STA précédente qui est dans la file d'attente de la STA et qui est adjacente à la STA ; et
l'exécution, par la STA, d'une CCA dans un intervalle de temps entre le troisième moment et le deuxième moment, et la détermination de M sous-canaux dont les résultats de CCA sont inactifs en tant que M sous-canaux inactifs.

5. Procédé selon l'une quelconque des revendications 2, 3 ou 4, dans lequel un vecteur d'attribution de réseau, NAV, d'un sous-canal sur lequel la CCA doit être exécutée est de 0.

6. Procédé selon l'une quelconque des revendications 1 à 5, dans lequel le message de notification de mesure indique que N STA doivent exécuter une mesure de canal, et que N est un nombre entier supérieur à ou égal à 1 ; et
le message de notification de mesure porte un champ d'indication de quantité LTF, qui est utilisé pour indiquer une quantité de champs LTF compris dans le signal de référence de sondage envoyé par la STA qui doit exécuter une mesure de canal ; ou le message de notification de mesure porte N champs d'indication de quantité LTF, les N champs d'indication de quantité LTF étant utilisés séparément pour indiquer des quantités de champs LTF compris dans des trames de signal de référence de sondage envoyées par les STA correspondant aux champs d'indication de quantité LTF.

7. Procédé selon la revendication 6, dans lequel si le message de notification de mesure porte un champ d'indication de quantité de LTF, le signal de référence de sondage envoyé par la STA comprend X LTF, X étant une quantité indiquée dans le champ d'indication de quantité de LTF.

8. Procédé selon la revendication 6, dans lequel si le message de notification de mesure porte N champs d'indication de la quantité LTF, les signaux de référence de sondage envoyés par les STA comprennent Y LTF, Y étant une quantité indiquée dans les champs d'indication de quantité de LTF correspondant aux STA.

9. Procédé selon l'une quelconque des revendications 1 à 8, dans lequel le procédé comprend en outre :
le signal de référence de sondage qui comprend en outre un champ de demande de ressource, le champ de demande de ressource étant utilisé pour indiquer un volume de données devant être transmises par la STA qui envoie le signal de référence de sondage ou un temps demandé par la STA pour la transmission de données.

10. Procédé selon l'une quelconque des revendications 1 à 9, dans lequel le message de notification de mesure comprend en outre une indication de type de signal de référence de sondage, l'indication du type de signal de référence de sondage étant utilisé pour indiquer un type du signal de référence de sondage, et le type comprenant un sondage NPD patrimonial et un sondage HEW NDP.

11. Procédé selon l'une quelconque des revendications 1 à 8, dans lequel le message de notification de mesure comporte en outre un second champ d'indication de puissance, le second champ d'indication de puissance étant utilisé pour indiquer la puissance utilisée par la STA pour envoyer le signal de référence de sondage, ou la puissance attendue lorsque le signal de référence de sondage envoyé par la STA atteint l'AP.

12. Station, STA, comprenant :
une unité de réception (201), configurée pour recevoir un message de notification de mesure envoyé par un point d'accès, AP, dans laquelle le message de notification de mesure porte des informations d'identificateur d'un canal devant être mesuré ;
une unité d'envoi (202), configurée pour envoyer un signal de référence de sondage à l'aide de M sous-canaux inactifs à l'AP, de telle sorte que l'AP est capable de mesurer les M sous-canaux inactifs selon le signal de référence de sondage reçu, dans laquelle les M sous-canaux inactifs sont des M sous-canaux inactifs déterminés par la STA à partir d'un canal indiqué dans les informations d'identificateur du canal devant être mesuré, et M est un entier supérieur ou égal à 1, dans laquelle le message de notification de mesure porte en outre un champ d'apprentissage long, LTF, un champ d'indication de quantité et la STA est en outre configurée pour déterminer, selon le champ d'indication de quantité LTF porté dans le message de notification de mesure, une file d'attente de la STA et un moment auquel la STA reçoit le message de notification de mesure, et un deuxième moment auquel la STA envoie le signal de référence de sondage, dans laquelle la file d'attente de la STA est obtenue par tri, selon une séquence d'ID appartenant aux STA et apparaissant dans le message de notification de mesure, les STA devant exécuter une mesure de canal, dans laquelle le message de notification de mesure porte en outre une liste d'ID de STA comprenant des ID de STA à ordonnancer pour exécuter une mesure de canal de liaison montante, dans laquelle la STA est comprise dans ladite liste d'ID de STA.

13. STA selon la revendication 12, dans laquelle la STA comporte en outre une première unité d'évaluation de canal libre, CCA, (203) configurée pour :
exécuter une évaluation de canal libre, CCA, sur chaque sous-canal pris en charge à la fois par l'AP et par la STA, et déterminer un sous-canal dont le résultat de CCA est inactif en tant que sous-canal disponible ; et
la STA comporte en outre une première unité de détermination (204), la première unité de détermination étant spécifiquement configurée pour déterminer des M sous-canaux qui sont dans le canal indiqué dans les informations d'identificateur et qui sont identiques au sous-canal disponible en tant que M sous-canaux inactifs.
